# EUROPÄISCHE PATENTSCHRIFT

(11) **EP 3 414 457 B1**
(45) Veröffentlichungstag und Bekanntmachung des Hinweises auf die Patenterteilung: **11.03.2020**
(21) Anmeldenummer: 17704659.6
(22) Anmeldetag: 19.01.2017
(51) Int. Cl.: F04B 27/00, F04B 27/02, F04B 39/00, F04B 53/14

(54) **HUBKOLBENMASCHINE, INSBESONDERE ZWEI- ODER MEHRSTUFIGER KOLBENKOMPRESSOR, DRUCKLUFTVERSORGUNGSANLAGE, DRUCKLUFTVERSORGUNGSSYSTEM UND FAHRZEUG, INSBESONDERE PKW MIT EINER DRUCKLUFTVERSORGUNGSANLAGE**
RECIPROCATING-PISTON MACHINE, IN PARTICULAR TWO-STAGE OR MULTI-STAGE PISTON COMPRESSOR, COMPRESSED-AIR SUPPLY INSTALLATION, COMPRESSED-AIR SUPPLY SYSTEM AND VEHICLE, IN PARTICULAR PASSENGER CAR, HAVING A COMPRESSED-AIR SUPPLY INSTALLATION
MACHINE À PISTONS ALTERNATIFS, NOTAMMENT COMPRESSEUR À PISTONS ALTERNATIFS À AU MOINS DEUX ÉTAGES, DISPOSITIF D'ALIMENTATION EN AIR COMPRIMÉ, SYSTÈME D'ALIMENTATION EN AIR COMPRIMÉ ET VÉHICLE, NOTAMMENT VOITURE PARTICULIÈRE ÉQUIPÉE D'UN DISPOSITIF D'ALIMENTATION EN AIR COMPRIMÉ

(30) Priorität: 11.02.2016 DE 102016001576
(43) Veröffentlichungstag der Anmeldung: 19.12.2018
(73) Patentinhaber: WABCO Europe BVBA, 1170 Brüssel (BE)
(72) Erfinder: BREDBECK, Klaus, 31628 Landesbergen (DE); KIRCHHOFF, Dirk, 31028 Despetal (DE); NUSS, Eduard, 31028 Gronau (DE); SEEGER, Marco, 30855 Langenhagen (DE); STABENOW, Uwe, 30880 Laatzen (DE); WOLTMANN, Fritz, 31275 Lehrte (DE)
(74) Vertreter: Rabe, Dirk-Heinrich
(86) Internationale Anmeldenummer: PCT/EP2017/000057
(87) Internationale Veröffentlichungsnummer: WO 2017/137141

(56) Entgegenhaltungen:
- WO-A1-2004/029476
- DE-A1- 4 420 861
- DE-A1-102004 020 104

## Beschreibung

Die Erfindung betrifft eine Hubkolbenmaschine, insbesondere einen zwei- oder mehrstufigen Kolbenkompressor, gemäß dem Oberbegriff des Anspruchs 1. Weiter betrifft die Erfindung eine Druckluftversorgungsanlage und ein Druckluftversorgungssystem sowie ein Fahrzeug, insbesondere ein PKW, mit einer Hubkolbenmaschine, insbesondere mit einem Kolbenkompressor.

Eine Druckluftversorgungsanlage wird in Fahrzeugen aller Art, insbesondere zur Versorgung einer Luftfederanlage eines PKWs oder eines Nutzfahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Druckluftversorgungssystems umfasst eine Anzahl von an einer gemeinsamen Leitung (Galerie) pneumatisch angeschlossenen Luftbälgen, die mit zunehmender Befüllung den Fahrzeugaufbau anheben und mit abnehmender Befüllung absenken können. Ein solches System wird beispielsweise in einem Geländefahrzeug und einem Sport-Utility-Vehicle (SUV) oder einem Nutz- oder Personentransportfahrzeug eingesetzt.

Zur Sicherstellung eines langfristen Betriebs der Druckluftversorgungsanlage weist diese einen Lufttrockner auf, mit dem die Druckluft zu trocknen ist. Dadurch wird die Ansammlung von Feuchtigkeit in dem Druckluftversorgungssystem vermieden, die ansonsten bei vergleichsweise niedrigen Temperaturen zu ventilschädigender Eiskristallbildung und sonstigen unerwünschten Effekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung - bei vergleichsweise hohem Druck- in der Druckluft enthaltende Feuchtigkeit durch Adsorption aufnehmen kann. Es hat sich dabei oftmals bewährt, das Trockengranulat in einer Trocknerkartusche unterzubringen, die ein Trocknerbett zur Führung einer Druckluftströmung aufweist.

Eine Druckluftversorgungsanlage zur Verwendung in einem pneumatischen Druckluftversorgungssystem mit einer Pneumatikanlage, beispielsweise mit einer zuvor beschriebenen Luftfederanlage, wird mit Druckluft aus einer Druckluftzuführung betrieben, beispielsweise im Rahmen eines Druckniveaus von 5 bar bis 20 bar. Die Druckluft wird mittels eines Luftverdichters (Kompressor), vorliegend mit einer Hubkolbenmaschine, bevorzugt mit einem zwei- oder mehrstufigen Kolbenkompressor, der Druckluftzuführung zur Verfügung gestellt.

Bei einer Druckluftversorgungsanlage für ein Druckluftversorgungssystem in einem Fahrzeug ist die von dem Luftverdichter versorgte Druckluftzuführung einerseits zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann die Druckluftversorgungsanlage und/oder die Pneumatikanlage durch Ablassen von Luft zum Entlüftungsanschluss hin entlüftet werden.

Der Antrieb der Hubkolbenmaschine im Luftverdichter (Kompressor) der Druckluftzuführung erfolgt regelmäßig mit einem Antriebsmotor, dessen Antriebsleistung über eine Kurbelwelle und ein oder mehrere Pleuel an einen oder mehrere Kolben des bevorzugt zwei- oder mehrstufigen Kolbenkompressors weitergegeben - ein Kolben läuft im Betrieb abgedichtet in einem Zylinder. Der Antrieb der Hubkolbenmaschine im Luftverdichter (Kompressor) der Druckluftzuführung kann auch beispielsweise mit einem Riemenantrieb erfolgen.

Auf diese Weise wird angesaugte Umgebungsluft oder aus einer anderen Druckluftquelle zugeführte Ansaugluft verdichtet. Grundsätzlich haben sich dazu sogenannte TWIN-Kolbenkompressoren bewährt; d. h. zwei-stufige Kolben-Kompressoren deren zwei Kolben über zwei diesen jeweils zugeordnete Pleuel angetrieben werden, welche wiederum genau entlang einer Zylinder-Achse, die bevorzugt exakt parallel und mittensymmetrisch zu Zylinderlaufflächen im Zylinderhubraum für den Kolben ausgerichtet verläuft, ausgerichtet sind.

Je nach angeforderter Dynamik und Druckbelastung kann ein solcher oder anderer zweistufiger oder mehrstufiger Kompressor im Betrieb zunehmende Betriebsgeräusche entwickeln, die - wie sich herausstellt - maßgeblich durch eine Körperschallübertragung durch den Pleueltrieb u.a. in den Antriebsmotor des Kompressors oder deren Gehäuse verursacht sein können. Wünschenswert ist es, eine verbesserte Akustik und einen gleichwohl verlässlichen Pleueltrieb in einem Kompressor in Form der genannten Hubkolbenmaschine zu realisieren. Dies soll insbesondere auch für einen besonders geringen Geräuschpegel im PKW-Bereich ausreichend sein.

DE 10 2004 020 104 offenbart in etwa einen TWIN-Kompressor mit symmetrisch gelagerten Doppelkolben für einen Verdichter, mit einem länglichen Kolbenträger, der an jedem Ende einen Kolben aufweist, und mit einem etwa parallel zum Kolbenträger verlaufenden Pleuel, das mittels eines Lagers auf einem Bolzen des Kolbenträgers drehbar gelagert ist und im Abstand davon mittels eines Pleuellagers auf einem Exzenter einer Antriebseinrichtung gelagert ist. Der Kolbenträger enthält in einem mittleren Bereich, der sich zwischen beiden Kolben erstreckt, einen zur frei beweglichen Aufnahme des Pleuels bemessenen Zwischenraum, in dem das Pleuel frei beweglich aufgenommen ist.

Die DE4420861A1 beschreibt eine Kurbelantriebsvorrichtung, welche zwei einander gegenüberliegend angeordnete Behälter, in den Behältern vorgesehene bewegbare oder verformbare Elemente, durch welche die Kapazitäten der Behälter verändert werden können, während die Luftdichtigkeit derselben beibehalten bleibt. Die Elemente sind durch einen einzigen Verbinder miteinander verbunden, und der Verbinder ist an einer exzentrischen Welle festgelegt, welche um eine Drehwelle eines Motors herum vorgesehen ist. Daher wird die Drehbewegung des Motors natürlich und gleichmäßig durch den einzigen Verbinder in eine lineare Hin- undHerbewegung der bewegbaren oder verformbaren Elemente umgewandelt, und es wird möglich, den Abstand zwischen den Behältern kürzer zu gestalten.

Es zeigt sich, wie von der Erfindung erkannt, dass Lösungen dieser Art Gefahr laufen, eine vergleichsweise hohe Schallentwicklung und m.E. Körperschallübertragungen durch den Pleueltrieb in den Kompressor-Antriebsmotor und damit auch nach außen zu verursachen.

An dieser Stelle setzt die Erfindung an, deren Aufgabe es ist, eine Hubkolbenmaschine, insbesondere einen zwei- oder mehrstufigen Kolbenkompressor, vorzugsweise TWIN-Kompressor, sowie eine Druckluftversorgungsanlage zum Betreiben einer Pneumatikanlage mit einer Druckluftströmung anzugeben, mittels der eine verbesserte Akustik und ein gleichwohl verlässlicher Pleueltrieb in einem Kolbenkompressor zu realisieren ist. Dies soll insbesondere auch für Geräuschpegelanforderungen im PKW-Bereich geeignet sein. Insbesondere sollen, im Rahmen einer akustischen Verbesserung, Körperschallemissionen eines Pleueltriebes in angrenzende, abstrahlende Bauteile, wie Elektromotor, Kurbeltrieb oder dergleichen Bauteile eines Luftverdichters (Kompressors) reduziert werden. Insbesondere soll die Druckluftversorgungsanlage vergleichsweise kompakt sein. Aufgabe der Erfindung ist es auch, ein entsprechendes Druckluftversorgungssystem und ein Fahrzeug mit dem Druckluftversorgungssystem, insbesondere für eine Luftfederanlage, anzugeben.

Die Aufgabe hinsichtlich der Hubkolbenmaschine wird mit einer Hubkolbenmaschine, insbesondere mit dem zwei- oder mehrstufigen Kolbenkompressor, vorzugsweise TWIN-Kompressor, des Anspruchs 1 gelöst.

Diese weist auf:
- wenigstens einen ersten Zylinder sowie wenigstens einen dem ersten Zylinder zugeordneten ersten Kolben und wenigstens einen zweiten Zylinder sowie wenigstens einen dem zweiten Zylinder zugeordneten zweiten Kolben, wobei im Betrieb die Kolben in einem jeweiligen Zylinderhubraum des jeweiligen Zylinders ausgelenkt werden,
- eine im Betrieb antreibbare Kurbelwelle mit einem exzentrischen Kurbelwellenzapfen und einer Antriebswellen-Kopplung, die zum ankoppeln einer Antriebswelle eines Antriebsmotors zum Antreiben der Kurbelwelle ausgebildet ist,
- ein zum Auslenken des ersten Kolbens ausgebildetes erstes Pleuel,
- ein zum Auslenken des zweiten Kolbens ausgebildetes zweites Pleuel, und
- einen Lagerbolzen, um den das erste und zweite Pleuel drehbeweglich sind,
wobei das erste Pleuel mittels wenigstens einem ersten Pleuellager direkt am Kurbelwellenzapfen gelagert ist und mittels dem exzentrischen Kurbelwellenzapfen bewegbar ist und das zweite Pleuel mittels dem Lagerbolzen bewegbar ist.

Erfindungsgemäß ist vorgesehen, dass
zwischen dem Lagerbolzen und wenigstens einem der Pleuel wenigstens ein zweites Pleuellager und wenigstens ein das wenigstens eine zweite Pleuellager elastisch dämpfendes und/oder federndes Elastomer-Element angeordnet ist.

Das zweite Pleuellager kann zwischen dem ersten Pleuel und dem Lagerbolzen oder zwischen dem zweiten Pleuel und dem Lagerbolzen angeordnet sein. Weiterhin können auch mehrere zweite Pleuellager zwischen Lagerbolzen und ersten sowie zweitem Pleuel angeordnet sein. Das oder die zweiten Pleuellager werden jeweils mittels eines Elastomer-Elements elastisch gedämpft und/oder gefedert. Bevorzugt ist das zweite Pleuellager und ein elastisch dämpfendes und/oder federndes Elastomer-Element zwischen dem Lagerbolzen und dem ersten Pleuel angeordnet und der Lagerbolzen fest mit dem zweiten Pleuel verbunden. Eine feste Verbindung ist beispielsweise durch einen Pressverbund möglich.

Das Elastomer-Element kann sowohl dämpfende, als auch federnde Eigenschaften aufweisen. Die dämpfenden und federnden Eigenschaften des Elastomer-Elements basieren auf der Materialzusammensetzung des Elastomer-Elements und dessen Geometrie, insbesondere dessen Form. Das Elastomer-Element kann auch im Wesentlichen nur dämpfende Eigenschaften oder nur federnde Eigenschaften haben. Bevorzugt hat das Elastomer-Element sowohl dämpfende, als auch federnde Eigenschaften.

Unter einer direkten Lagerung ist zu verstehen, dass das Pleuel direkt über das Pleuellager durch den Kurbelwellenzapfen bewegt wird.

Die Aufgabe hinsichtlich der Druckluftversorgungsanlage wird mit einer Druckluftversorgungsanlage des Anspruchs 24 gelöst. Eine Druckluftversorgungsanlage zum Betreiben einer Pneumatikanlage, insbesondere einer Luftfederanlage eines Fahrzeugs, vorzugsweise eines PKWs, mit einer Druckluftströmung, weist auf:
- eine Lufttrockneranordnung in einer Pneumatikhauptleitung, die eine Druckluftzuführung von einem Luftverdichter und einen Druckluftanschluss zu der Pneumatikanlage pneumatisch verbindet, und
- eine an die Pneumatikhauptleitung pneumatisch angeschlossene Ventilanordnung zur Steuerung der Druckluftströmung und einen Lufttrockner in der Pneumatikhauptleitung, wobei
- an die Druckluftzuführung ein Luftverdichter mit einer Hubkolbenmaschine, insbesondere ein zwei- oder mehrstufiger Kolbenkompressor, vorzugsweise TWIN-Kompressor, insbesondere der Ansprüche 1 bis 23 angeschlossen ist.

Die Aufgabe betreffend das Druckluftversorgungssystem wird mit einem Druckluftversorgungssystem des Anspruchs 25 gelöst. Die Erfindung führt auch auf ein Fahrzeug, insbesondere ein PKW-Fahrzeug, des Anspruchs 26. Alternativ kann auch ein LKW-Fahrzeug vorgesehen sein, insbesondere kann ein LKW-Kompressor für die Luftaufbereitung vorgesehen sein.

Ein Druckluftversorgungssystem mit einer Pneumatikanlage und mit einer Druckluftversorgungsanlage dient zum Betreiben der Pneumatikanlage mit einer Druckluftströmung, insbesondere einer Luftfederanlage eines Fahrzeugs, vorzugsweise eines PKWs, wobei die Pneumatikhauptleitung eine Druckluftzuführung von einem Luftverdichter mit einer Hubkolbenmaschine, insbesondere einem zwei- oder mehrstufiger Kolbenkompressor, vorzugsweise TWIN-Kompressor, nach einem der Ansprüche 1 bis 23 und einen Druckluftanschluss zu der Pneumatikanlage pneumatisch verbindet.

Ein Fahrzeug, insbesondere PKW, ist mit einer Pneumatikanlage, insbesondere einer Luftfederanlage, und einer Druckluftversorgungsanlage gemäß Anspruch 24 zum Betreiben der Pneumatikanlage mit einer Druckluftströmung versehen.

Eine Zylinder-Achse ist im Wesentlichen symmetrisch zu Zylinderlaufflächen für die Kolben in den Zylinderhubräumen des wenigstens einen Zylinders ausgerichtet. Unter einer Zylinder-Achse mit daran ausgerichteten Zylinderhubräumen ist insbesondere zu verstehen, dass die Zylinderlaufflächen an den Zylinderhubräumen eines Zylinders für den Kolben exakt parallel und symmetrisch zur Zylinder-Achse stehen.

Vorzugsweise ist der exzentrische Kurbelwellenzapfen - insbesondere auch die Antriebswellen-Kopplung - parallel zu einer senkrecht zur Zylinder-Achse ausgerichteten Wellen-Achse ausgerichtet; d. h. dass der Kurbelwellenzapfen und/oder ein diesen umgebendes Pleuellager senkrecht zur Zylinder-Achse steht.

Die Erfindung geht von der Überlegung aus, dass je nach angeforderter Dynamik und Druckbelastung bei einem Luftverdichter, ein zwei- oder mehrstufiger Kompressor, insbesondere ein zweistufiger TWIN Kompressor oder eine sonstige Hubkolbenmaschine im Betrieb zunehmend Betriebsgeräusche entwickelt, die - wie sich herausstellt - vor allem durch eine Körperschallübertragung durch den Pleueltrieb in den Kompressor-Antriebsmotor verursacht sein können. Es tritt bei gängigen Gleitlagern und Nadellagern eine hohe Geräuschentwicklung insbesondere beim Lastwechsel zwischen den Pleueln auf. Es zeigt sich, wie von der Erfindung erkannt, dass die Betriebsgeräusche zum Teil durch im Stand der Technik konstruktiv erforderliche Pleuellagerspiele bedingt sind. Die Pleuellagerspiele beispielsweise von Nadellagern werden durch metallisch harte Anschläge versucht auszugleichen, welche jedoch zu hohen Akustikemissionen führen. Die Anschläge der Pleuel werden bei im Stand der Technik verwendeten Hubkolbenmaschinen direkt in die umgebenden Komponenten übertragen und führen deshalb zu hohen Betriebsgeräuschen. Ein Gleitlager, insbesondere aus Kunststoff kann durch seine weicheren Materialeigenschaften die harten Anschläge des Pleuellagerspiels ausgleichen. Jedoch verschleißen Gleitlager mit der Zeit, so dass sich mit längerer Verwendung der Gleitlager eine relativ große Pleuellagerspielerhöhung ergibt, die wiederum zu einer Geräuscherhöhung führt. Insbesondere Kunststoff-Gleitlager besitzen ein gutes Dämpfungsverhalten, sind jedoch verschleißempfindlich bei hohen Temperaturen und zeigen ein starkes Einlaufverhalten, was zu einer Pleuellagerspielerhöhung führt. Dies führt mit der Lebensdauer der Kunststoff-Gleitlager zu einem Anstieg der Akustik-Emissionen. Wälzlager dahingegen weisen grundsätzlich ein schlechtes Dämpfungsverhalten auf, da in diesem Fall typischerweise Stahl auf Stahl trifft.

Die Erfindung hat nun erkannt, dass durch wenigstens ein Elastomer-Element zum dämpfen und/oder federn des zweiten Pleuellagers, eine verbesserte Akustik in einem Kompressor zu realisieren ist; auch mit einer insbesondere für einen PKW-Bereich akzeptablen niedrigen Geräuschentwicklung. Darüberhinaus ist das Konzept der vorliegenden Erfindung ebenfalls bevorzugt für ein Nutzfahrzeug (NFZ) oder Personentransport-Fahrzeug, insbesondere wenn bei diesem die Druckluftversorgungsanlage für vergleichsweise hohe Druckamplituden ausgelegt ist. Das Konzept der vorliegenden Erfindung kann ebenfalls Anwendung im LKW-Bereich finden.

Wie von der Erfindung erkannt, sehen bisherige Lösungen - vereinfacht dargestellt - Kugellager oder Gleitlager zur Lagerung zwischen Pleueln und dem Lagerbolzen vor. Die Erfindung hat ferner erkannt, dass eine Dämpfung der zweiten Pleuellagers zu einer Geräuschverringerung der Hubkolbenmaschine und somit des gesamten Systems, beispielsweise Fahrzeugs wie PKW während des Betriebs führen kann. Die Erfindung sieht vor das zweite Pleuellager, insbesondere Wälz- oder Gleitlager durch Elastomer-Elemente zu dämpfen und/oder zu federn. Elastomer-Elemente haben gute Dämpfungseigenschaften und können einen Teil der Geräusche aufnehmen. Die Geräuschentwicklung kann hierdurch vorteilhaft maßgeblich gesenkt werden. Die Erfindung verbindet mithin die vorteilhafte Lebensdauer des Wälzlagers, insbesondere eines Nadellagers mit den positiven akustischen Eigenschaften des Gleitlagers.

Die dämpfenden Eigenschaften des Elastomer-Elements können die Körperschallanregung senken. Es kann ein Energieübertrag zwischen dem Pleuel, dem Lagerbolzen und dem zweiten Pleuellager mittels der Elastomer-Elemente verringert werden, um die Geräuschübertragung zu verringern. Das Elastomer-Element kann die Wirkung eines entkoppelnden Elements haben. Des Weiteren können die durch die metallisch harten Anschläge für den Spielausgleich verursachten Geräusche und Körperschallemissionen durch die dämpfenden Eigenschaften des Elastomer-Elements verringert werden. Weiterhin kann eine Belastung der Kanten der Lager verringert werden, da Verkippungen und Verschränkungen der Pleuel durch das Elastomer-Element ausgeglichen werden können. Dies verringert wiederum den Verschleiß. Auch eine Korrektur von Schiefstellung und/oder Wellenbiegung ist mittels des Elastomer-Elements möglich. Die Verwendung des Elastomer-Elements zur Dämpfung und/oder Federung des zweiten Pleuellagers ermöglicht ferner temperaturbedingte Veränderungen der Bauteile, insbesondere der Pleuel und des Lagerbolzens auszugleichen, wodurch geringere Lagertoleranzen insbesondere bei Hoch- und Tieftemperaturanwendungen ermöglicht werden. Insbesondere kann einer Materialausdehnung in radialer Richtung bei Temperaturänderungen ausgeglichen werden. Des Weiteren kann die Lagerbelastung verringert werden, indem die Körperschallemissionen der angeregten Achsen und die Steifigkeit zwischen den Pleueln bzw. Pleuelbaugruppen verringert werden kann.

Die Erfindung ermöglicht insbesondere eine Optimierung des akustischen Verhaltens, insbesondere eines zweistufigen TWIN Kompressors, da das Elastomer-Element hinsichtlich seiner Auslegungskriterien frei parametrierbar ist. Beispielsweise ist die Auswahl des Werkstoffes, d.h. die Härte, und die Geometrie des Elastomer-Elements, d.h. der Durchmesser, die Breite, die Wanddicke und/oder ähnliche Parameter frei parametrierbar. Dies kann u.a. zu einer Reduzierung der Geräuschentwicklung, insbesondere des initialen Pegels, der Pegelstreuung und der Pegelerhöhung über die Betriebsdauer führen. Die freie Parametrisierbarkeit ermöglicht es das Elastomer-Element immer an die vorhandenen Betriebsbedingungen anzupassen. Weiterhin kann in bestimmten Weiterbildungen der Erfindung die Anzahl an Bauteilen reduziert werden, in denen beispielsweise nur ein Innenring oder Außenring eines Wälzlagers verwendet wird. Der Entfall einer Lagerbuchse oder einer Elastomerbuchse bei einem Gleitlager, ermöglicht es die Kosten zu verringern. Das Entfallen von zusätzlichen Bauteilen verringert des Weiteren den erforderlichen Bauraum, beispielsweise da keine separate Lagerhülse notwendig ist, wodurch die Verwendung von größeren oder alternativen Lagervarianten ermöglicht wird.

Weiterhin kann in einer Weiterbildung bei der die Erfindung ein Elastomer-Element mit progressiver Dämpfungskennlinie aufweist, die Aufschlaggeschwindigkeit in den Kraftumschlagpunkten optimiert werden, so dass die Pleuel nicht hart in die folgenden Bauteile schlagen und so hohe Körperschallübertragung verursachen. Es ist dadurch möglich die wirkende Kraft und den emittierten Körperschall zu verringern. Es ist ferner möglich die Lagerung zu vereinfachen und hierdurch die Körperschallanregung zu reduzieren. Des Weiteren kann die Lebensdauer der Verdichterelemente durch Verringerung der Verspannung erhöht werden. Die Erfindung ermöglicht es weiterhin das zweite Pleuellager sowohl als Nadellager mit Außenring, als auch als Gleitlager in Metall auszuführen. Des Weiteren können auch die notwendigen Lagertoleranzen verringert werden, was zu einer Spielverringerung führt und schließlich auch zu einer Geräuschverringerung.

Insbesondere in einer Weiterbildung, bei der das Elastomer-Element direkt auf das zweite Pleuellager aufvulkanisiert ist, kann ein zusätzliches Bauteil, üblicherweise eine Metallbuchse, entfallen.

In einer weiteren Weiterbildung, bei der das zweite Pleuellager ein Gleitlager ist, kann die Auflagefläche erhöht werden, wodurch weniger Flächenbelastung auftritt. Die Dämpfung durch das Elastomer-Element führt zu einer geringeren Körperschallübertragung, wodurch auch der Luftschall leiser ist. Der Spielausgleich mittels des Elastomer-Elements kann den Flächenabrieb des Gleitlagers verringern und hierdurch die Lebensdauer des Gleitlagers erhöhen. Die Verwendung eines Gleitlagers kann kostengünstiger und leiser sein als die Verwendung eines Wälzlagers, da keine Rollgeräusche durch Wälzkörper wie Walzen, Rollen, Nadeln oder dergleichen auftreten.

Die im Rahmen einer Druckluftversorgungsanlage zur Verwendung in einem pneumatischen Druckluftversorgungssystem hier beschriebene Hubkolbenmaschine, insbesondere der Kolbenkompressor, kann jedoch grundsätzlich auch in anderen Anwendungsgebieten Verwendung finden, insbesondere dort wo - wie bei den genannten Druckluftversorgungsanlagen - flexibel und dynamisch vergleichsweise hohe Druckamplituden erzielt werden sollen. Insbesondere kann die Hubkolbenmaschine in einem Verdichter für eine PKW Fahrwerkregelung Verwendung finden. Weiterhin kann die Hubkolbenmaschine, insbesondere der Kolbenkompressor in einem mehrstufigen Verdichter mit mindestens zwei Verdichterstufen, die nach dem Schleppkolbenprinzip arbeiten, Verwendung finden. Die Erfindung kann des Weiteren Verwendung in einem Kolbenkompressor zur Versorgung von Luftfederfahrwerken und Liftachsen, insbesondere in PKW Fahrzeugen finden. Die Erfindung kann weiterhin in einem LKW Kolbenkompressor für die Luftaufbereitung Verwendung finden.

Vorteilhafte Weiterbildungen der Erfindung sind den Unteransprüchen zu entnehmen und geben im Einzelnen vorteilhafte Möglichkeiten an, dass oben erläuterte Konzept im Rahmen der Aufgabenstellung sowie hinsichtlich weiterer Vorteile zu realisieren.

Ein Pleuel kann starr ohne Gelenklager oder auch gelenkig, insbesondere mit Gelenklager, ausgebildet sein. Ein Kolben kann am Pleuel gehaltert, gehalten oder an dem Pleuel einstückig ausgebildet sein. Der Kolben ist bevorzugt an dem Pleuel angeformt, fest verbunden oder mittels einer Kolbenhalterung gehalten.

Im Rahmen einer besonders bevorzugten Weiterbildung ist das zweite Pleuel mittels dem zweiten Pleuellager und dem Lagerbolzen indirekt am Kurbelwellenzapfen gelagert. Unter einer indirekten Lagerung ist zu verstehen, dass das Pleuel über ein weiteres Bauteil (beispielsweise bevorzugt das erste Pleuel bzw. das erste Pleuel und den Lagerbolzen), das heißt indirekt, durch den Kurbelwellenzapfen bewegt wird, jedoch nicht direkt an diesem gelagert ist.

Im Rahmen einer besonders bevorzugten Weiterbildung kann das erste Pleuel direkt mittels des exzentrischen Kurbelwellenzapfens bewegbar sein und das zweite Pleuel indirekt mittels dem exzentrischen Kurbelwellenzapfen, insbesondere direkt mittels dem ersten Pleuel, bewegbar sein. Vorzugsweise ist bei dieser Weiterbildung das zweite Pleuel (als Schlepppleuel) vom ersten Pleuel (als Antriebspleuel) bewegbar, wobei das erste Pleuel direkt vom Kurbelwellenzapfen bewegt wird. Eine vorgenannte Weiterbildung hat sich insbesondere bewährt zur Realisierung eines zweistufigen Kolbenkompressors, der auch als TWIN-Kompressor zu bezeichnen ist, nämlich mit zwei gegenüberliegenden Kolben entlang einer Zylinderachse.

Vorzugsweise ist das wenigstens eine Elastomer-Element ein Gummielement oder als Elastomer-Schicht, insbesondere Gummibeschichtung zwischen zweitem Pleuellager und Pleuel oder Lagerbolzen und zweitem Pleuellager eingebracht. Insbesondere kann die Gummibeschichtung auf der Bolzenoberfläche und/oder auf der Pleuelinnenoberfläche eingebracht, beispielsweise aufvulkanisiert, eingespritzt oder dergleichen sein. Das Elastomer-Element kann eine aufgebrachte Elastomer-Schicht, insbesondere eine eingespritzte oder aufvulkanisierte Elastomer-Schicht sein. Vorzugsweise ist die aufgebrachte Elastomer-Schicht auf eine Lagerbolzenoberfläche, eine Pleuelinnenoberfläche des ersten Pleuels und/oder eine Pleuelinnenoberfläche des zweiten Pleuels aufgebracht. Das Elastomer-Element, insbesondere in Form einer aufgebrachten Elastomer-Schicht dient zum dämpfen und/oder federn.

In einer bevorzugten Weiterbildung ist das Elastomer-Element eine aufgebrachte Schicht, insbesondere Elastomer-Schicht. Bevorzugt ist die Elastomer-Schicht eine eingespritzte oder aufvulkanisierte Schicht, die vorzugsweise auf eine Lagerbolzenoberfläche, eine Pleuelinnenoberfläche des ersten Pleuels, eine Pleuelinnenoberfläche des zweiten Pleuels und/oder ein Pleuellager aufgebracht ist. Bevorzugt dient die Elastomer-Schicht im Betrieb als Lauffläche für Walzen eines Pleuellagers. Zusätzlich oder alternativ kann die Elastomer-Schicht sowohl dämpfende, als auch federnde Wirkung aufweisen oder nur dämpfende oder nur federnde Wirkung. Die aufgebrachte Schicht kann auf einer Innenoberfläche oder auf einer Außenoberfläche des Pleuellagers aufgebracht sein.

In einer weiteren bevorzugten Weiterbildung ist das zweite Pleuellager ein Wälzlager und das Elastomer-Element eine auf das Wälzlager aufvulkanisierte Elastomer-Schicht. Bevorzugt ist das Wälzlager ein Nadellager. Alternativ kann anstatt eines Nadellagers auch ein anderes Wälzlager, beispielsweise ein Kugellager oder ein Tonnenlager, bevorzugt aus Metall, verwendet werden. Bevorzugt weist das Nadellager einen Außenring und einen Innenring auf. Die Elastomer-Schicht kann auf einer Außenoberfläche des Außenrings oder einen Innenoberfläche des Innenrings aufvulkanisiert sein. Bevorzugt ist die Elastomer-Schicht auf der Außenoberfläche des Außenrings aufvulkanisiert. Das Nadellager ist bevorzugt zwischen dem Lagerbolzen und wenigstens einem der Pleuel verpresst. Die Innenoberfläche des Innenrings des Nadellagers ist bevorzugt fest mit dem Lagerbolzen durch Pressverbund verbunden. Eine Pleuelinnenoberfläche des wenigstens einen Pleuels ist bevorzugt mit der auf der Außenoberfläche des Nadellagers aufvulkanisierten Elastomer-Schicht verbunden.

Im Rahmen einer weiteren Weiterbildung kann das zweite Pleuellager ein Außenring eines Wälzlager, insbesondere ein Außenring eines Nadellagers sein und das Elastomer-Element eine auf den Außenring des Wälzlagers aufvulkanisierte Elastomer-Schicht. Die Elastomer-Schicht ist bevorzugt auf einer Außenoberfläche des Außenrings des Wälzlagers aufvulkanisiert. Die Walzen des Außenrings des Wälzlagers laufen im Betrieb auf einer Lagerbolzenoberfläche des Lagerbolzens. Die auf der Außenoberfläche des Wälzlagers aufvulkanisierte Elastomer-Schicht ist mit einer Pleuelinnenoberfläche des wenigstens einen Pleuels verbunden.

Im Rahmen noch einer weiteren Weiterbildung kann das zweite Pleuellager auch ein Gleitlager sein und das Elastomer-Element eine auf das Gleitlager aufvulkanisierte Elastomer-Schicht. Bevorzugt ist das Gleitlager in dieser Weiterbildung ein Metall-Gleitlager.

Das Elastomer-Element hat eine materialabhängige Härte. Bevorzugt wird ein Material, wie beispielsweise Gummi für das Elastomer-Element verwendet, das gute Dämpfungseigenschaften hat, um eine Geräuschreduzierung zu ermöglichen. Weiterhin kann alternativ oder zusätzlich ein Material verwendet werden, dass gute Federeigenschaften aufweist. Insbesondere kann eine Gummimischung zur Anpassung der Eigenschaften des Gummis als Material für das Elastomer-Element verwendet werden. Weiterhin können die Eigenschaften des Elastomer-Elements über die Geometrie des Elastomer-Elements eingestellt werden. Beispielsweise kann eine Form, insbesondere die Breite, Höhe, Länge, Durchmesser und Wanddicke entsprechend der jeweiligen Betriebsbedingungen angepasst werden. Die Anpassung des Materials und der Geometrie des Elastomer-Elements ermöglicht es die Dämpfungs- und Federeigenschaften des Elastomer-Elements zu optimieren und an jeweilige Betriebsbedingungen anzupassen.

Im Rahmen einer besonders bevorzugten Weiterbildung weist wenigstens eines der Pleuellager ein Gleitlager oder ein Wälzlager auf. Insbesondere kann das Pleuellager ein Nadellager, ein Kugellager oder ein Tonnenlager aufweisen. Das erste und zweite Pleuellager können Gleitlager aufweisen. Das erste und zweite Pleuellager können auch Wälzlager aufweisen. Es kann das erste Pleuellager ein Gleitlager aufweisen und das zweite Pleuellager ein Wälzlager. Es kann auch das erste Pleuellager ein Wälzlager aufweisen und das zweite Pleuellager ein Gleitlager. Das erste Pleuellager ist bevorzugt ein Wälzlager. In einer Weiterbildung ist das zweite Pleuellager ein Gleitlager. Das Gleitlager kann beispielsweise eine Gleitlagerbuchse oder dergleichen sein. Das Gleitlager kann von dem Elastomer-Element umgeben sein, um dieses im Betrieb zu dämpfen.

Im Rahmen einer weiteren besonders bevorzugten Weiterbildung weist wenigstens eines der Pleuellager einen Außenring und/oder einen Innenring eines Wälzlagers auf. Bevorzugt ist das Wälzlager ein Nadellager. Das Pleuellager kann also lediglich einen Außenring, lediglich einen Innenring oder sowohl einen Außenring als auch einen Innenring aufweisen. Außenring und Innenring des Wälzlagers können beispielsweise eine Nadelhülse, eine Nadelbüchse, ein Metallring oder dergleichen sein. Der Außenring weist bevorzugt Walzen bzw. Nadeln, Rollen oder dergleichen auf seiner Innenoberfläche auf und der Innenring weist bevorzugt Walzen bzw. Nadel, Rollen oder dergleichen auf seiner Außenoberfläche auf. Sowohl der Außenring, als auch der Innenring können auch Ringe ohne Walzen sein. Außenring und Innenring des Wälzlagers können beispielsweise auch Nadelkränze sein, wobei in diesem Fall sowohl Außenring, als auch Innenring Walzen bzw. Nadeln, Rollen oder dergleichen aufweisen, die dazu ausgebildet sind im Betrieb auf einer Oberfläche zu laufen. Die Walzen bzw. Nadeln, Rollen oder dergleichen der Nadelkränze durchstoßen sowohl die Außenoberfläche als auch die Innenoberfläche des Außenrings und Innenrings, so dass die Walzen bzw. Nadeln, Rollen oder dergleichen im Betrieb auf einer gegenüberliegenden Innenoberfläche und Außenoberfläche laufen. Wenn das Pleuellager Außenring und Innenring aufweist, sind der Außenring und der Innenring des Wälzlagers bevorzugt konzentrisch zueinander angeordnet, so dass im Betrieb Walzen, wie beispielsweise Nadeln des Außenrings auf einer Außenoberfläche des Innenrings laufen und Walzen, wie beispielsweise Nadeln des Innenrings auf einer Innenoberfläche des Außenrings laufen. Es kann auch einer der Ringe, also Außenring oder Innenring als Ring ohne Walzen ausgeführt sein, so dass dieser im Wesentlichen als Lauffläche für die Walzen des anderen Rings dient. Bevorzugt ist der Ring, wenn er ohne Walzen ausgeführt ist, aus einem Metall, insbesondere Stahl.

Im Rahmen einer bevorzugten Weiterbildung der Hubkolbenmaschine weist das zweite Pleuellager einen Innenring eines Nadellagers auf, der um den Lagerbolzen herum angeordnet ist. Das Elastomer-Element ist zwischen Innenring des Nadellagers und wenigstens einem der Pleuel angeordnet. Insbesondere ist das Elastomer-Element auf eine Pleuelinnenoberfläche aufvulkanisiert, sodass Wälzkörper, Walzen bzw. Nadeln, Rollen oder dergleichen des Innenrings des Nadellagers im Betrieb auf dem Elastomer-Element laufen.

Im Rahmen einer weiteren bevorzugten Weiterbildung der Hubkolbenmaschine weist das zweite Pleuellager einen Außenring eines Nadellagers auf, der um den Lagerbolzen herum angeordnet ist. Das Elastomer-Element ist zwischen Außenring des Nadellagers und wenigstens einem der Pleuel angeordnet. Insbesondere ist das Elastomer-Element auf eine Pleuelinnenoberfläche aufvulkanisiert und dient zur Dämpfung des Nadellagers. Die Wälzkörper, Walzen bzw. Nadeln, Rollen oder dergleichen des Außenrings des Nadellagers laufen im Betrieb auf einer Lagerbolzenoberfläche des Lagerbolzens.

Im Rahmen einer Weiterbildung kann das Elastomer-Element ein separates Teil sein. Das Elastomer-Element kann alternativ oder zusätzlich dazu dienen eine Dämpfungswirkung zu erzeugen. Weiterhin kann das Elastomer-Element auch dazu dienen eine Federwirkung zu erzeugen. Das Elastomer-Element kann eine dämpfende und eine federnde Wirkung aufweisen. Es können auch Elastomer-Elemente mit dämpfender Wirkung mit Elastomer-Elementen mit federnder Wirkung kombiniert werden. Das Elastomer-Element kann beispielsweise eine Elastomer-Hülse, eine Elastomer-Buchse, z.B. eine Kunststoffbuchse, ein Elastomer-Käfig, ein Elastomer-Ring oder dergleichen sein. Bevorzugt ist das Elastomer-Element zwischen Lagerbolzen und zweitem Pleuellager oder zwischen zweitem Pleuellager und wenigstens einem der Pleuel eingelegt, verpresst oder geklemmt. Das Elastomer-Element kann sich über die gesamte Länge einer Längsachse des Lagerbolzens oder über die Länge der Pleuelinnenoberflächen des ersten und zweiten Pleuels erstrecken. Alternativ können auch mehrere Elastomer-Elemente zwischen Lagerbolzen und zweitem Pleuellager oder zwischen zweitem Pleuellager und wenigstens einem der Pleuel angeordnet sein. Es können also auch beispielsweise zwei Elastomer-Elemente zwischen dem zweiten Pleuellager und dem ersten Pleuel und/oder zwei Elastomer-Elemente zwischen dem zweiten Pleuellager und dem zweiten Pleuel angeordnet sein. Es kann aber auch lediglich nur ein Elastomer-Element zwischen dem ersten Pleuel und dem zweiten Pleuellager und/oder nur ein Elastomer-Elemente zwischen dem zweiten Pleuel und dem zweiten Pleuellager angeordnet sein. Alternativ kann auch nur ein Elastomer-Element zwischen erstem Pleuel oder zweitem Pleuel und zweitem Pleuellager angeordnet sein und das jeweils andere Pleuel direkt und fest mit dem Lagerbolzen verbunden sein, beispielsweise über Metallpressverbundelemente und eine Metallpressverbindung. Das Elastomer-Element hat bevorzugt eine dämpfende und/oder federnde Wirkung.

Im Rahmen einer bevorzugten Weiterbildung sind zwei Elastomer-Elemente als Elastomer-Buchsen, insbesondere als Kunststoffbuchsen ausgeführt, die zwischen Lagerbolzen und zweitem Pleuellager angeordnet sind. Alternativ kann auch nur ein Elastomer-Element zwischen Lagerbolzen und zweitem Pleuellager angeordnet sein. Das zweite Pleuellager ist bevorzugt ein Wälzlager und insbesondere ein Nadellager. Das Nadellager kann Außen- und Innenring aufweisen oder lediglich einen Außenring, so, dass die Kunststoffbuchse in diesem Fall als Innenring dient, auf dem im Betrieb Walzen des Außenringes des Nadellagers laufen. Die Variante mit Außenring und Innenring ist bevorzugt, da die auf der Kunststoffbuchse laufenden Walzen des Außenrings zu einem erhöhten Verschleiß führen können. Die Kunststoffbuchsen können einen Bund aufweisen, so dass das zweite Pleuellager von den Kunststoffbuchsen seitlich umschlossen wird. Der Bund dient dazu die Laufgeräusche der Walzen des Nadellagers zu dämpfen bzw. die Schallemissionen der Walzen einzuhausen. Weiterhin ermöglicht es der Bund einen Kontakt der Pleuel miteinander zu verhindern oder zumindest zu verringern, so dass ein Verschleiß des Pleuelmaterials, insbesondere Aluminiumfressen, verhindert oder zumindest verringert werden kann. Des Weiteren ermöglicht der Bund die Materialausdehnung in axialer Richtung bei Temperaturänderungen auszugleichen. Der Lagerbolzen, beispielsweise ein Stahlkoppelbolzen, ist bevorzugt im zweiten Pleuel außen durch einen Pressverbund fixiert. Die zwei Kunststoffbuchsen sind bevorzugt auf dem Lagerbolzen verpresst. Im Fall, dass ein Innenring des Nadellagers vorhanden ist, ist dieser bevorzugt auf die Kunststoffbuchsen verpresst. Der Außenring des Nadellagers ist im zweiten Pleuel verpresst. Anstatt der Kunststoffbuchse oder Kunststoffbuchsen kann auch ein Elastomermaterial verwendet werden.

In einer bevorzugten Weiterbildung ist das Elastomer-Element ringförmig, buchsenförmig oder hülsenförmig. Die Form des Elastomer-Elements kann auch auf die Formen der an das Elastomer-Element angrenzenden und/oder von dem Elastomer-Element gedämpften und/oder gefederten Komponenten angepasst sein. Das Elastomer-Element kann auch hohlzylinderförmig sein. Die Wanddicke des Elastomer-Element ist bevorzugt konstant. In einer Weiterbildung ändert sich die Wanddicke entlang einer Längsachse des Elastomer-Elements, insbesondere vergrößert oder verkleinert sich die Wanddicke. Bevorzugt ist die Wanddicke und die Änderung der Wanddicke auf die Betriebsbedingungen und insbesondere auf das zweite Pleuellager, sowie auf die weiteren mit dem Elastomer-Element in Kontakt stehenden Komponenten, wie beispielsweise dem Pleuel und dem Lagerbolzen angepasst.

In einer weiteren bevorzugten Weiterbildung ist das Elastomer-Element eine Elastomer-Hülse, die um das zweite Pleuellager herum angeordnet ist und dazu dient Drehbewegungen des Lagerbolzens zu dämpfen. Das Elastomer-Element kann auch ein Elastomer-Ring oder eine Elastomer-Hülse sein oder aufweisen. Bevorzugt ist der Elastomer-Ring oder die Elastomer-Hülse in dieser Weiterbildung zwischen wenigstens einem der Pleuel und dem zweiten Pleuellager, insbesondere einem Nadellager, geklemmt oder gepresst.

In einer weiteren Weiterbildung ist das Elastomer-Element plattenförmig, insbesondere eine Noppe oder ringsegmentförmig. Das Elastomer-Element kann ein, zwei oder mehrere Ringsegmente, beispielsweise Elastomer-Ringsegmente, insbesondere Gummiringsegmente aufweisen. Bevorzugt sind die Ringsegmente einander gegenüberliegend und insbesondere um den Lagerbolzen herum angeordnet. Auch die Parameter der Ringsegmente können entsprechend den Betriebsbedingungen angepasst werden, insbesondere deren Geometrie und das verwendete Material können entsprechen den Betriebsbedingungen ausgewählt werden. Die Verwendung von Ringsegmenten ermöglicht eine Verringerung des Materialverbrauchs und führt zu kleineren Elastomer-Elementen. Hierdurch ist eine Lastübertragung beispielsweise nur in zwei Ringsegmente notwendig.

Im Rahmen einer bevorzugten Weiterbildung ist das Elastomer-Element mit einem Metallträger verbunden oder in Kontakt. Der Metallträger kann beispielsweise eine Metallbuchse, eine Metallhülse, ein Metallring oder eine Metallplatte sein. Das Elastomer-Element kann beispielsweise in den Metallträger eingeklemmt, angeklebt, aufvulkanisiert oder eingespritzt sein. Bevorzugt umschließt in diesem Fall der Metallträger das Elastomer-Element. Das Elastomer-Element kann auch beispielsweise um den Metallträger aufgeklemmt, angeklebt, aufvulkanisiert oder aufgespritzt sein. Bevorzugt umschließt in diesem Fall das Elastomer-Element den Metallträger. Es kann auch ein Elastomer-Element zwischen zwei Metallträgern angeordnet sein, beispielsweise sandwichartig. Es kann auch ein Metallträger zwischen zwei Elastomer-Elementen angeordnet sein, beispielsweise sandwichartig. Die Elastomer-Elemente können in diesem Fall auf den Metallträger aufgespritzt und in diesen eingespritzt sein oder auch separate Teile, beispielsweise Elastomer-Ringe sein, die in diesen eingelegt bzw. um diesen herum gelegt werden können. Das mit einem Metallträger verbundene oder in Kontakt seiende Elastomer-Element dient dazu das zweite Pleuellager zu dämpfen. Das zweite Pleuellager kann ein Gleitlager oder ein Wälzlager, insbesondere ein Nadellager sein.

In einer weiteren Weiterbildung weist das Elastomer-Element wenigstens zwei Elastomer-Ringe auf. Die Elastomer-Ringe sind bevorzugt parallel und mit einem Abstand zueinander zwischen dem Lagerbolzen und wenigstens einem der Pleuel angeordnet. Die Elastomer-Ringe können beide zwischen Lagerbolzen und zweitem Pleuellager oder zwischen zweitem Pleuellager und wenigstens einem der Pleuel angeordnet sein. Die Elastomer-Ringe können auch beiden zwischen zweitem Pleuellager und jeweils einem der Pleuel angeordnet sein. Es können auch beispielsweise drei Elastomer-Ringe angeordnet sein. Die Elastomer-Ringe dienen dazu das wenigstens eine zweite Pleuellager elastisch zu dämpfen. Die Elastomer-Ringe können auch eine federnde Wirkung haben oder eine dämpfende und federnde Wirkung. Es können auch Elastomer-Platten oder segmentierte Elastomer-Ringe zwischen den Pleueln und dem Lagerbolzen angeordnet sein.

Im Rahmen einer weiteren Weiterbildung weist das Elastomer-Element wenigstens eine nur einseitig, insbesondere an einer Lagerbolzenoberseite angeordnete Platte auf. Alternativ oder zusätzlich kann das Elastomer-Element wenigstens zwei einander gegenüberliegende, an der Lagerbolzenoberseite und einer Lagerbolzenunterseite, angeordnete Platten aufweisen.

Im Rahmen einer bevorzugten Weiterbildung ist das wenigstens eine Elastomer-Element zwischen einem inneren und einem äußeren Metallträger angeordnet. Bevorzugt ist der innere Metallträger mit dem zweiten Pleuellager verbunden und der äußere Metallträger mit wenigstens einem der Pleuel verbunden. Alternativ kann auch der innere Metallträger mit dem Lagerbolzen und der äußere Metallträger mit dem zweiten Pleuellager verbunden sein. Bevorzugt ist die Verbindung zwischen Elastomer-Element und Metallträgern fest und direkt. Die Verbindung kann beispielsweise derart sein, dass ein Elastomer-Element beispielsweise in Form eines Elastomer-Rings zwischen dem inneren und dem äußeren Metallträger geklemmt ist. Besonders bevorzugt ist das Elastomer-Element mit dem inneren und dem äußeren Metallträger fest und direkt verbunden, beispielsweise indem das Elastomer-Element als Beschichtung bzw. Schicht auf eine Außenoberfläche des inneren Metallträgers und eine Innenoberfläche des äußeren Metallträgers eingebracht, z.B. eingespritzt, aufvulkanisiert oder mit einem oder mehreren anderen Verfahren eingebracht ist. Des Weiteren können der innere Metallträger mit dem zweiten Pleuellager und der äußere Metallträger mit wenigstens einem der Pleuel fest und direkt verbunden sein, beispielsweise, indem die Metallträger unter Spannung eingeklemmt werden. Es können auch mehrere Metallträger ineinander angeordnet sein oder beispielsweise ein Metallträger zwischen zwei Elastomer-Elementen. Auch eine Anordnung mehrere wechselnder Schichten von Metallträgern und Elastomer-Elementen ist möglich. Insbesondere können die Elastomer-Elemente verschiedene Materialeigenschaften aufweisen, um so die Dämpfung und/oder Federung des zweiten Pleuellagers auf die Betriebsbedingungen anzupassen.

Im Rahmen einer weiteren bevorzugten Weiterbildung ist das wenigstens eine Elastomer-Element zwischen einem inneren Metallträger und wenigstens einem der Pleuel angeordnet. Bevorzugt ist der innere Metallträger mit dem zweiten Pleuellager verbunden und das Elastomer-Element ist bevorzugt mit wenigstens einem der Pleuel verbunden. Alternativ kann auch der innere Metallträger mit dem Lagerbolzen verbunden sein und das Elastomer-Element mit dem zweiten Pleuellager. Die Verbindung mit dem Elastomer-Element ist bevorzugt direkt und fest. Die Verbindung kann beispielsweise derart sein, dass das Elastomer-Element beispielsweise in Form eines Elastomer-Rings zwischen den inneren Metallträger und wenigstens einem der Pleuel geklemmt ist. Besonders bevorzugt ist das Elastomer-Element mit dem inneren Metallträger und mit wenigstens einem der Pleuel fest und direkt verbunden, beispielsweise indem das Elastomer-Element als Beschichtung bzw. Schicht auf eine Außenoberfläche des inneren Metallträgers und eine Pleueloberfläche wenigstens eines der Pleuel eingebracht ist, z.B. eingespritzt, aufvulkanisiert oder mit einem oder mehreren anderen Verfahren eingebracht ist. Das Elastomer-Element kann in dieser bevorzugten Weiterbildung auch fest und direkt mit wenigstens einem der Pleuel verbunden sein, indem das Elastomer-Element direkt zwischen inneren Metallträger, beispielsweise einer Metallhülse und Pleuel eingebracht, beispielsweise eingespritzt, aufgespritzt, aufvulkanisiert oder dergleichen, ist. Das zweite Pleuellager kann einen Außenring und einen Innenring aufweisen. Alternativ kann das zweite Pleuellager auch lediglich einen Außenring oder lediglich einen Innenring aufweisen. Bevorzugt weist das zweite Pleuellager nur einen Innenring auf. Das zweite Pleuellager ist bevorzugt als Wälzlager ausgeführt. In diesem Fall laufen Walzen des Innenrings des zweiten Pleuellagers auf einer Metallträgerinnenoberfläche des inneren Metallträgers. Der Innenring des zweiten Pleuellagers ist bevorzugt fest mit dem Lagerbolzen verbunden und insbesondere bevorzugt fest mit dem Lagerbolzen verpresst.

Weiterhin ist im Rahmen einer weiteren bevorzugten Weiterbildung das wenigstens eine Elastomer-Element zwischen dem zweiten Pleuellager und einem äußeren Metallträger angeordnet. Alternativ kann das Elastomer-Element auch zwischen dem Lagerbolzen und einem äußeren Metallträger angeordnet sein, wobei der äußere Metallträger in diesem Fall mit dem Elastomer-Element verbunden ist. Bevorzugt ist das Elastomer-Element mit dem zweiten Pleuellager und der äußere Metallträger mit wenigstens einem der Pleuel verbunden. Die Verbindung kann beispielsweise derart sein, dass das Elastomer-Element beispielsweise in Form eines Elastomer-Rings zwischen das zweite Pleuellager und den äußeren Metallträger geklemmt ist. Besonders bevorzugt ist das Elastomer-Element mit dem zweiten Pleullager und dem äußeren Metallträger fest und direkt verbunden, beispielsweise indem das Elastomer-Element als Beschichtung bzw. Schicht auf eine Pleuellageroberfläche des zweiten Pleuellagers und eine Innenoberfläche des äußeren Metallträgers eingebracht ist, z.B. eingespritzt, aufvulkanisiert oder mit einem oder mehreren anderen Verfahren eingebracht ist.
Im Rahmen einer weiteren bevorzugten Weiterbildung ist das zweite Pleuellager eine Gleitlagerbuchse und der äußere Metallträger eine Metallhülse, insbesondere aus Messing. Die Gleitlagerbuchse ist in dieser Weiterbildung zwischen Lagerbolzen und Elastomer-Element angeordnet und dient zur Lagerung des oder der Pleuel um den Lagerbolzen.

Im Rahmen einer weiteren Weiterbildung ist das Elastomer-Element als Gummielement ausgeführt und zwischen zwei Stahlhülsen eingespritzt. Diese Komponente ist bevorzugt in ein Pleuel eingepresst oder auf den Lagerbolzen aufgepresst und mit dem zweiten Pleuellager verbunden. Eine weitere Weiterbildung sieht vor das Elastomer-Element als Gummielement auszuführen und auf eine Stahlbuchse aufzuspritzen. Diese Komponente ist bevorzugt in ein Pleuel eingepresst und/oder geklebt. In noch einer weiteren Weiterbildung kann das Elastomer-Element als Gummielement ausgeführt sein und auf eine Stahlbuchse aufgespritzt oder in ein Pleuel eingespritzt sein und mit dem zweiten Pleuellager verbunden sein. Das Elastomer-Element kann als Gummielement auch als Vollgummiteil montiert, beispielsweise eingepresst und/oder geklebt sein. In einer weiteren Weiterbildung kann das Elastomer-Element als Gummielement ausgeführt sein, das wenigstens zweiteilig am Umfang des Pleuels angeordnet ist.

Im Rahmen einer weiteren bevorzugten Weiterbildung weist das wenigstens eine Elastomer-Element wenigstens zwei voneinander getrennte Ringsegmente auf. Bevorzugt ist von den wenigstens zwei getrennten Ringsegmenten wenigstens ein erstes Ringsegment auf einer Lagerbolzenoberseite zwischen Lagerbolzen und Pleuel und wenigstens ein zweites Ringsegment auf einer Lagerbolzenunterseite zwischen Lagerbolzen und Pleuel angeordnet. Das zweite Pleuellager ist mit dem Elastomer-Element verbunden, wird von dem Elastomer-Element gedämpft und/oder gefedert und ist zwischen Lagerbolzen und Elastomer-Element oder zwischen Elastomer-Element und Pleuel angeordnet. Die voneinander getrennten Ringsegmente des Elastomer-Elements können beispielsweise höchstens ein Viertel des Umfangs auf der Lagerbolzenoberseite und höchstens ein Viertel des Umfangs auf der Lagerbolzenunterseite umschließen, so dass wenigstens die Hälfte des Umfangs des Lagerbolzens frei vom Elastomer-Element ist.

In einer bevorzugten Weiterbildung beträgt ein maximaler Auslenkungswinkel der Auslenkung der Pleuel zwischen jeweiligen Längsachsen der Pleuel höchstens 14°, beispielsweise höchstens 10° und vorzugsweise ungefähr 7°. Der maximale Auslenkungswinkel der Pleuel kann beispielsweise maximal +/- 7° betragen. Der maximale Auslenkungswinkel kann durch verschiedene Komponenten der Hubkolbenmaschine begrenzt werden. Insbesondere kann beispielsweise das Elastomer-Element Elastomer-Auswölbungen aufweisen, die als Anschläge dienen und den maximalen Auslenkungswinkel begrenzen. Alternativ oder zusätzlich können auch die Pleuel derart ausgebildet und zueinander angeordnet sein, dass die maximale Auslenkung der Pleuel konstruktiv zueinander begrenzt ist. Dies ist beispielsweise möglich, indem eines der Pleuel wenigstens teilweise innerhalb des anderen Pleuels angeordnet ist.

Im Rahmen einer bevorzugten Weiterbildung weist das Elastomer-Element einen Bund auf, der dazu ausgebildet ist ein Verschieben der Pleuel zueinander entlang einer Längsachse des Lagerbolzens zu verhindern. Der Bund dient bevorzugt des Weiteren dazu eine Verkippung der Pleuel zueinander entlang einer anderen als einer vorbestimmten Auslenkungsachse zu verhindern oder zumindest zu verringern. Der Bund des Elastomer-Elements ermöglicht es die Anzahl der Bauteile zu reduzieren, indem Anlaufscheiben am Lagerbolzen weggelassen werden können. Des Weiteren wird ein Anschlagen der Pleuel aneinander entlang der Längsachse des Lagerbolzens verhindert. Ferner dient das Elastomer-Element insbesondere in Kombination mit dem Bund dazu das Pleuellager abzudichten, so dass Schmiermittel des Pleuellagers, vorzugsweise ein Schmierfett, Schmieröl, oder dergleichen nicht aus dem Pleuellager austreten kann.

Im Rahmen einer weiteren bevorzugten Weiterbildung weist das wenigstens eine Elastomer-Element entlang des Elastomer-Elements angeordnete Elastomer-Auswölbungen auf, die als Anschläge für Walzen des zweiten Pleuellagers dienen. Das zweite Pleuellager weist bevorzugt wenigstens ein Wälzlager, beispielsweise ein Nadellager, ein Tonnenlager, ein Kugellager oder dergleichen auf. Bevorzugt sind die Elastomer-Auswölbungen entlang eines Umfangs auf einem Elastomer-Element, beispielsweise einem Elastomer-Ring angeordnet. Die Elastomer-Auswölbungen können auf einer Außenoberfläche und/oder einer Innenoberfläche des Elastomer-Elements angeordnet sein. Wenn die Elastomer-Auswölbungen auf einer Außenoberfläche des Elastomer-Elements angeordnet sind, ist bevorzugt ein Außenring eines Wälzlagers, insbesondere Nadellagers, um das Elastomer-Element herum angeordnet, so dass im Betrieb die Walzen des Wälzlagers auf der Außenoberfläche des Elastomer-Elements laufen und die Elastomer-Auswölbungen als Anschläge für die Walzen dienen und die Auslenkung begrenzen. Wenn die Elastomer-Auswölbungen auf einer Innenoberfläche des Elastomer-Elements angeordnet sind, ist bevorzugt ein Innenring eines Wälzlagers, insbesondere Nadellagers, von dem Elastomer-Element umschlossen angeordnet, so dass im Betrieb die Walzen des Wälzlagers auf der Innenoberfläche des Elastomer-Elements laufen und die Elastomer-Auswölbungen als Anschläge für die Walzen dienen und die Auslenkung begrenzen. Wenn das Elastomer-Element auf seiner Innenoberfläche und Außenoberfläche Elastomer-Auswölbungen aufweist, ist das Elastomer-Element bevorzugt zwischen einem Außenring und einem Innenring des Wälzlagers angeordnet.

Bei einer weiteren Weiterbildung weist das wenigstens eine Elastomer-Element entlang des Elastomer-Elements angeordnete Elastomer-Auswölbungen auf, die ausgebildet sind auf eine Oberfläche des zweiten Pleuellagers eine Dämpfungswirkung zu bewirken. Die Elastomer-Auswölbungen können auch dazu ausgebildet sein auf eine Oberfläche des zweiten Pleuellagers eine Federwirkung zu bewirken. Bevorzugt weist das zweite Pleuellager wenigstens ein Gleitlager auf. Besonders bevorzugt sind die Elastomer-Auswölbungen entlang eines Umfangs auf einem Elastomer-Element, beispielsweise einem Elastomer-Ring angeordnet. Das Elastomer-Element kann einen Elastomer-Ring, mehrere Elastomer-Ringe, ein Elastomer-Ringsegment oder mehrere Elastomer-Ringsegmente aufweisen. Die Elastomer-Auswölbungen können auf einer Außenoberfläche und/oder einer Innenoberfläche des Elastomer-Elements angeordnet sein. Zwischen den Elastomer-Auswölbungen sind Kammern gebildet wenn ein Gleitlager um das Elastomer-Element herum angeordnet ist und/oder das Elastomer-Element von dem Gleitlager umschlossen ist. In den Kammern kann ein Schmiermittel, beispielsweise ein Schmierfett, ein Schmieröl oder ein anderes Schmiermittel, oder ein reibungsreduzierendes Material, insbesondere ein reibungsreduzierendes Fluid angeordnet sein. In Abhängigkeit der Anzahl der Elastomer-Auswölbungen und deren Abstand ergeben sich eine bestimmte Anzahl von Kammern zwischen diesen und dem Gleitlager oder den Gleitlagern. Das Elastomer-Element ist bevorzugt derart ausgebildet, dass es eine progressive Feder-Kennlinie erzeugt.

Im Rahmen einer weiteren Weiterbildung hat es sich als vorteilhaft erwiesen, dass das erste Pleuel mittels des ersten Pleuellagers direkt am Kurbelwellenzapfen gelagert ist und an das erste Pleuel mittels einer Kolbenhalterung der erste Kolben gehalten ist. An dem zweiten Pleuel ist der zweite Kolben angeformt und das zweite Pleuel ist mittels dem zweiten Pleuellager und dem Lagerbolzen mit dem ersten Pleuel verbunden. In diesem Fall der Weiterbildung ist ein Schlepppleuel mit einem angeformten Kolben und ein Antriebspleuel mit einem daran gehaltenen Kolben realisiert. Grundsätzlich kann unabhängig von dieser Weiterbildung ein am Pleuel angeformter Kolben beziehungsweise ein am Pleuel gehaltener Kolben je nach Bedarf realisiert sein. Für ein mit der (Niederdruck-) Verdichterstufe eines TWIN-Kompressors gebildetes Schlepppleuel hat sich vor allem ein angeformter Kolben bewährt. Für eine weiter unten erläuterte (Hochdruck-) Verdichterstufe eines TWIN-Kompressors hat sich vor allem ein Antriebspleuel mit einem daran gehaltenen Kolben bewährt.

Im Rahmen einer bevorzugten konstruktiven Realisierung kann das erste Pleuellager als ein Ring-Kugellager realisiert sein, das bevorzugt in Form eines Ring-Kugellagers am Kurbelwellenzapfen, das heißt direkt am Kurbelwellenzapfen gebildet ist. Das erste Pleuellager kann auch ein Ring-Kugellager und/oder ein Gelenklager sein.

Wie weiter oben bereits erwähnt, hat sich eine Hubkolbenmaschine als ein Kolbenkompressor mit einem zweistufigen Kompressor mit einer ersten und zweiten Verdichterstufe besonders bewährt für die Bereitstellung von Druckluft für eine Druckluftversorgungsanlage. Insbesondere kann der Zweistufenkompressor als ein TWIN-Kompressor gebildet sein. Es ist insbesondere vorgesehen, dass das erste Pleuel der zweiten, insbesondere (Hochdruck-)Verdichterstufe gebildet ist und das erste Pleuel mittels dem ersten Pleuellager direkt am Kurbelwellenzapfen gelagert ist. Zusätzlich oder alternativ hat es sich als vorteilhaft erwiesen, dass das zweite Pleuel der ersten, insbesondere (Niederdruck-)Verdichterstufe gebildet ist und das zweite Pleuel mittels dem zweiten Pleuellager und dem Lagerbolzen direkt am ersten Pleuel gelagert ist.

In einer Weiterbildung der Hubkolbenmaschine ist zwischen dem Lagerbolzen und wenigstens einem der Pleuel ein zweites Pleuellager und wenigstens ein das zweite Pleuellager elastisch dämpfendes und/oder federndes Elastomer-Element angeordnet.

Ein Aspekt der Erfindung betrifft die Verwendung der Hubkolbenmaschine, insbesondere des Kolbenkompressors in einem Verdichter bzw. Luftverdichter für eine PKW Fahrwerkregelung. Ein weitere Aspekt der Erfindung betrifft die Verwendung der Hubkolbenmaschine, insbesondere des Kolbenkompressors für die Luftaufbereitung für einen LKW. Weiterhin betrifft ein Aspekt der Erfindung die Verwendung der Hubkolbenmaschine in weiteren Verdichtern wie beispielsweise einem Klimakompressor in Fahrzeugen wie PKW sowie Nutzfahrzeugen (NFZ), in elektrohydraulischen Servolenkungen, sowie des Weiteren in einem Verdichter für ABS/EBS-Hydraulikpumpen. Ein Aspekt der Erfindung betrifft auch die Verwendung der Erfindung in elektrischen Antrieben für Vakuumpumpen. Die Erfindung kann auch generell in Kolbenverbindungen Anwendung finden.

Alle vorbeschriebenen Ausgestaltungen der Hubkolbenmaschine können auch ohne Elastomer-Element ausgeführt sein. Diese Ausgestaltungen bilden jedoch keinen Teil der Erfindung gemäß des Anspruchs 1 und stellen eine alternative Erfindung dar. Insbesondere kann beispielsweise das zweite Pleuellager als Nadellager ohne Käfig ausgeführt sein, d.h. in Form von zwei ineinander liegenden Nadelkränzen. Diese sind dann zwischen Lagerbolzen und ersten und/oder zweiten Pleuel angeordnet. Die Walzen bzw. Nadeln der Nadelkränze laufen dann auf jeweils dem anderen Nadelkranz und entweder dem Lagerbolzen oder einer Pleuelinnenoberfläche. Eine Ausgestaltung der Nadellager ohne Käfig kann somit die Auflagefläche vergrößern.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen, bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung.

Im Einzelnen zeigen die Zeichnungen in:
FIG. 1: eine pneumatische Schaltung für eine Ausführungsform einer Druckluftversorgungsanlage mit angeschlossener Pneumatikanlage in Form einer Luftfederanlage für ein Fahrzeug, wobei ein im Detail D gezeigter zwei-stufiger Kolbenkompressor im Rahmen eines Luftverdichters die Luftfederanlage mit Druckluft versorgt über eine Lufttrockneranordnung und eine als entsperrbares Rückschlagventil ausgebildete Ventilanordnung, die über ein steuerbares Magnetventil schaltbar ist;
FIG. 2: für einen Luftverdichter, eine Hubkolbenmaschine in Form eines zweistufigen Kolbenkompressors mit einem ersten Pleuel für einen ersten Kolben einer zweiten (Hochdruck)-Stufe und einem zweiten Pleuel einer ersten (Niederdruck)-Stufe und mit einem ersten Pleuellager und einem zweiten Pleuellager auf das ein Elastomer-Element in Form einer Elastomerschicht aufvulkanisiert ist;
FIG. 3: einen Ausschnitt eines weiteren Ausführungsbeispiels einer Hubkolbenmaschine in Form eines zwei-stufigen Kolbenkompressors mit einem ersten Pleuel für einen ersten Kolben einer zweiten (Hochdruck)-Stufe und einem zweiten Pleuel in einer Schnittansicht;
FIG. 4a: für einen Luftverdichter, eine Hubkolbenmaschine in Form eines zweistufigen Kolbenkompressors mit einem ersten Pleuel für einen ersten Kolben einer zweiten (Hochdruck)-Stufe und einem zweiten Pleuel für einen zweiten Kolben einer ersten (Niederdruck)-Stufe in einer Schnittansicht;
FIG. 4b: einen Ausschnitt der Hubkolbenmaschine in Form eines zwei-stufigen Kolbenkompressors der Fig. 4a mit einem ersten Pleuel für einen Kolben einer zweiten (Hochdruck)-Stufe und einem zweiten Pleuel und einen das erste und zweite Pleuel verbindenden Lagerbolzen, der über ein zweites Pleuellager, einen Metallträger und ein Elastomer-Element mit dem zweiten Pleuel verbunden ist;
FIG. 5: für einen Luftverdichter, eine Hubkolbenmaschine in Form eines zweistufigen Kolbenkompressors mit einem ersten Pleuel für einen ersten Kolben einer zweiten (Hochdruck)-Stufe und einem zweiten Pleuel einer ersten (Niederdruck)-Stufe und mit einem ersten Pleuellager und einem zweiten Pleuellager in Form eines Nadellagers auf das ein Elastomer-Element in Form einer Elastomerschicht aufvulkanisiert ist in einer Schnittansicht;
FIG. 6: für eine Hubkolbenmaschine in Form eines zwei-stufigen Kolbenkompressors, ein erstes Pleuel mit einem ersten Kolben und mit einem ersten Pleuellager und einem zweiten Pleuellager in Form eines Gleitlagers um das ein Elastomer-, Element in Form eines Elastomer-Rings und ein Metallträger in Form eines äußeren Rings aus Messing angeordnet sind in einer Schnittansicht;
FIG. 7: für eine Hubkolbenmaschine in Form eines zwei-stufigen Kolbenkompressors, ein erstes Pleuel mit einem ersten Kolben und mit einem ersten Pleuellager und einem zweiten Pleuellager in Form eines Gleitlagers um das ein Elastomer-Element in Form eines Elastomer-Rings angeordnet ist in einer Schnittansicht;
FIG. 8: für eine Hubkolbenmaschine in Form eines zwei-stufigen Kolbenkompressors, ein erstes Pleuel mit einem ersten Kolben und mit einem zweiten Pleuellager in Form eines Gleitlagers um das ein Elastomer-Element in Form eines Elastomer-Rings angeordnet ist in einer Seitenansicht;
FIG. 9a: einen Ausschnitt eines ersten Pleuels mit einem zweiten Pleuellager in Form eines Nadellagers, einem inneren Metallträger, einem Elastomer-Element und einem äußeren Metallträger, die um einen Lagerbolzen herum zwischen dem Lagerbolzen und dem ersten Pleuel angeordnet sind;
FIG. 9b: einen Ausschnitt eines ersten Pleuels mit einem zweiten Pleuellager in Form eines Nadellagers, einem Elastomer-Element und einem äußeren Metallträger, die um einen Lagerbolzen herum zwischen dem Lagerbolzen und dem ersten Pleuel angeordnet sind;
FIG. 9c: einen Ausschnitt eines ersten Pleuels mit einem zweiten Pleuellager in Form eines Nadellagers und einem Elastomer-Element, die um einen Lagerbolzen herum zwischen dem Lagerbolzen und dem ersten Pleuel angeordnet sind;
FIG. 9d: einen Ausschnitt eines ersten Pleuels mit einem zweiten Pleuellager in Form eines Nadellagers, einem inneren Metallträger und einem Elastomer-Element, die um einen Lagerbolzen herum zwischen dem Lagerbolzen und dem ersten Pleuel angeordnet sind;
FIG. 10: eine erste perspektivische Darstellung eines ersten Pleuels mit einem ersten Kolben und einem im ersten Pleuel angeordneten äußeren Metallträger und Elastomer-Element;
FIG. 11: eine zweite perspektivische Darstellung des ersten Pleuels der FIG. 10 zusätzlich mit einem innerhalb des Elastomer-Elements anzuordnenden zweiten Pleuellagers in Form eines Gleitlagers;
FIG. 12: eine dritte perspektivische Darstellung des ersten Pleuels der FIG. 10 mit innerhalb des Elastomer-Elements angeordnetem Gleitlager;
FIG. 13: ein Elastomer-Ringsegment mit Elastomer-Auswölbungen und zwischen den Elastomer-Auswölbungen gebildeten Kammern;
FIG. 14: einen Ausschnitt eines ersten Pleuels, zwischen dessen Pleuelinnenoberfläche und einem Lagerbolzen ein Elastomer-Element in Form eines Elastomer-Rings mit Auswölbungen, ein zweites Pleuellager in Form eines Innenrings eines Nadellagers und ein weiteres Elastomer-Element in Form einer Elastomer-Schicht angeordnet sind, in Seitenansicht.

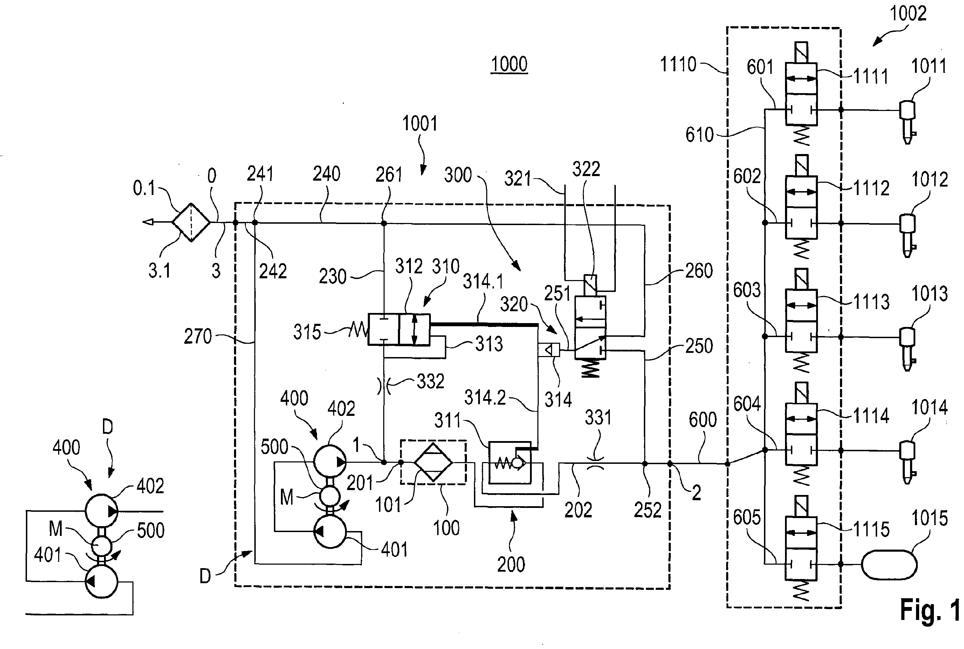

FIG. 1 zeigt im Detail D einen Luftverdichter mit einer Hubkolbenmaschine in Form eines zweistufigen Kolbenkompressors 400 mit einer ersten Verdichterstufe 401 und einer zweiten Verdichterstufe 402, der über einen Motor 500 als Antriebsmotor M angetrieben wird.

Solch ein Kolbenkompressor 400 wird bevorzugt für pneumatische Druckluftversorgungssysteme 1000 eingesetzt wie eines in FIG. 1 gezeigt ist.

FIG. 1 zeigt einen pneumatischen Schaltplan eines pneumatischen Druckluftversorgungssystems 1000 mit einer Druckluftversorgungsanlage 1001 mit einer Lufttrockneranordnung 100 und einer Pneumatikanlage 1002 in Form einer Luftfederanlage. Die Druckluftversorgungsanlage 1001 dient zum Betreiben der Pneumatikanlage 1002. Die Druckluftversorgungsanlage 1001 weist dazu eine vorerwähnte Druckluftzuführung 1 und einen Druckluftanschluss 2 zur Pneumatikanlage 1002 auf.

Die Druckluftzuführung 1 ist vorliegend mit einer Luftzuführung 0, einem der Luftzuführung 0 vorgeordneten Luftfilter 0.1 und einem der Luftzuführung 0 über die Luftzuführungsleitung 270 nachgeordneten über den Motor 500 angetriebenen Luftverdichter gebildet. Der Luftverdichter ist hier als Beispiel einer Hubkolbenmaschine in Form eines Doppelluftverdichter, nämlich einem zweistufigen Kolbenkompressors 400 mit einer ersten Verdichterstufe 401 und einer zweiten Verdichterstufe 402 sowie einem nicht näher bezeichnetem Anschluss der Druckluftzuführung 1 gebildet.

An den Anschluss der Druckluftzuführung 1 schließt sich in der Pneumatikhauptleitung 200 an den ersten Teil 201 der Pneumatikhauptleitung der Anschluss des Trockenbehälters 101 der Lufttrockneranordnung 100 an. Der Lufttrockner der Lufttrockneranordnung 100 ist weiter mittels dem zweiten Teil 202 der Pneumatikhauptleitung zur Führung einer Druckluftströmung DL zur Pneumatikanlage 1002 pneumatisch verbunden.

In der in FIG. 1 gezeigten Hauptansicht ist vorgesehen, dass eine Zweigleitung 230 an der Druckluftzuführung 1 von der Pneumatikhauptleitung 200 abzweigt und an eine Entlüftungsleitung 240 zur Entlüftung zu einem dem Entlüftungsanschluss 3 nachgeschalteten Entlüftungsfilter 3.1 anschließt; die Entlüftung ist mittels einem weiteren Zweiganschluss 241 und einem Anschlussabschnitt 242 an die Entlüftungsleitung 240 angeschlossen als auch an eine weitere Entlüftungsleitung 260 über den Zweiganschluss 261.

Die Pneumatikhauptleitung 200 verbindet somit pneumatisch die Druckluftzuführung 1 und den Druckluftanschluss 2, wobei in der Pneumatikhauptleitung 200 die Lufttrockneranordnung 100 und weiter in Richtung des Druckluftanschlusses 2 ein entsperrbares Rückschlagventil 311 sowie eine erste Drossel 331 angeordnet ist.

Das pneumatisch entsperrbare Rückschlagventil 311 ist vorliegend ein Teil der Wegeventilanordnung 310, die neben dem entsperrbaren Rückschlagventil 311 ein steuerbares Entlüftungsventil 312 in Reihenschaltung mit einer zweiten Drossel 332 in der Entlüftungsleitung 230 aufweist. Das pneumatisch entsperrbare Rückschlagventil 311 ist vorliegend ebenfalls in einer Reihenschaltung mit der ersten Drossel 331 in der Pneumatikhauptleitung 200 angeordnet, wobei die Pneumatikhauptleitung 200 die einzige pneumatische Leitung der ersten pneumatischen Verbindung ist, die sich bis zur Pneumatikanlage 1002 mit einer weiteren Pneumatikleitung 600 fortsetzt. Die Reihenanordnung aus erster Drossel 331 und pneumatisch entsperrbaren Rückschlagventil 311 ist also zwischen der Lufttrockneranordnung 100 und dem Druckluftanschluss 2 zur Pneumatikanlage 1002 in der Pneumatikhauptleitung 200 angeordnet.

Weiter weist die Druckluftversorgungsanlage 1001 eine mit der Pneumatikhauptleitung 200 und dem Entlüftungsanschluss 3 und weiterem Filter 3.1 und/oder Schalldämpfer pneumatisch verbundene zweite pneumatische Verbindung auf; nämlich die vorerwähnte Entlüftungsleitung 230. Die Nennweite der zweiten Drossel 332 liegt vorliegend oberhalb der Nennweite der ersten Drossel 331.

Das in der zweiten pneumatischen Verbindung angeordnete Entlüftungsventil 312 ist vorliegend als ein vom pneumatisch entsperrbaren Rückschlagventil 311 separates 2/2-Ventil in der Entlüftungsleitung 230 gebildet.

Das steuerbare Entlüftungsventil 312 ist somit als indirekt geschaltetes Relaisventil Teil einer Ventilanordnung 300 mit einem Steuerventil 320 in Form eines 3/2-Wege-Magnetventils. Das Steuerventil 320 kann mit einem über eine elektrische Steuerleitung 321 übermittelbaren elektrischen Steuersignal, in Form eines Spannungs- und/oder Stromsignals, an die Spule 322 des Steuerventils 320 elektrisch angesteuert werden. Bei dieser elektrischen Ansteuerung kann das Steuerventil 320 von der in FIG. 1 gezeigten stromlos die pneumatische Steuerleitung 250 unterbrechende Stellung in eine pneumatisch geöffnete Stellung überführt werden, in der über die pneumatische Steuerleitung 250 aus der Pneumatikhauptleitung 200 abgeleiteter Druck zur pneumatischen Steuerung des steuerbaren Entlüftungsventils 312 als Relaisventil weitergegeben wird.

Das steuerbare Entlüftungsventil 312 ist vorliegend zusätzlich mit einer Druckbegrenzung 313 versehen. Die Druckbegrenzung 313 greift über eine pneumatische Steuerleitung vor dem Entlüftungsventil 312 - konkret zwischen zweiter Drossel 332 und Entlüftungsventil 312 - einen Druck ab, welcher bei übersteigen eines Schwelldrucks den Kolben 314 des Entlüftungsventils 312 gegen die Kraft einer einstellbaren Feder 315 vom Ventilsitz abhebt - also das steuerbare Entlüftungsventil 312 auch ohne Ansteuerung über das Steuerventil 320 in die geöffnete Stellung bringt. Auf diese Weise wird vermieden, dass ein ungewollt zu hoher Druck im pneumatischen System 1000 entsteht.

Das Steuerventil 320 trennt im vorliegend geschlossenen Zustand die Steuerleitung 250 und ist über eine weitere Entlüftungsleitung 260 mit der Entlüftungsleitung 240 zur Entlüftung über den Entlüftungsanschluss 3 pneumatisch verbunden. Mit anderen Worten ist ein zwischen Entlüftungsventil 312 und Steuerventil 320 liegender Leitungsabschnitt 251 der Steuerleitung 250 bei der in FIG. 1 gezeigten geschlossenen Stellung des Steuerventils 320 mit der weiteren Entlüftungsleitung 260 zwischen Steuerventil 320 und dem Entlüftungsanschluss 3 verbunden. Die weitere Entlüftungsleitung 260 schließt dazu im weiteren Zweiganschluss 261 an die Entlüftungsleitung 230 und die weitere Entlüftungsleitung 240 an. Somit werden diese in einem zwischen dem weiteren Zweiganschluss 261 und dem Entlüftungsanschluss 3 liegenden Abschnitt einer Entlüftungsleitung 240 zusammengeführt.

Über das Steuerventil 320 kann also bei Anstehen eines von der Pneumatikhauptleitung 200 oder von der weiteren Pneumatikleitung 600 über die pneumatische Steuerleitung 250 vom Steueranschluss 252 abgeleiteten Steuerdrucks das Entlüftungsventil 312 unter Druckbeaufschlagung des Kolbens 314 geöffnet werden.

Der Kolben 314 ist vorliegend als ein Doppelkolben ausgeführt, so dass mit besonderem Vorteil versehen, das Überführen des Steuerventils 320 in den - im obigen Sinnegeöffneten Zustand nicht nur zum Öffnen des Entlüftungsventils 312 führt, sondern auch zum Entsperren des entsperrbaren Rückschlagventils 311. Mit anderen Worten dient das Steuerventil 320 der Magnetventilanordnung 300 zur Ansteuerung des separat vom Rückschlagventil 311 vorgesehenen Entlüftungsventils 312 als auch des Rückschlagventils 311. Dies führt zu einem beidseitigen pneumatischen Öffnen der Lufttrockneranordnung 100 bei Überführung des Steuerventils 320 in die geöffnete Stellung. Diese weitere durch die Druckluftversorgungsanlage 1001 einnehmbare Betriebsstellung kann im Betrieb zum Entlüften der Pneumatikanlage 1002 und gleichzeitig zum Regenerieren der Lufttrockneranordnung 100 genutzt werden.

Die in FIG. 1 gezeigte Betriebsstellung der Druckluftversorgungsanlage 1001 dient unter Durchfluss des Rückschlagventils 311 in Durchlassrichtung vor allem zum Befüllen der Pneumatikanlage 1002 über die Pneumatikhauptleitung 200 sowie die weitere Pneumatikleitung 600.

Die Pneumatikanlage 1002 der FIG. 1 in Form einer Luftfederanlage weist in diesem Fall eine Anzahl von vier sogenannten Bälgen 1011, 1012, 1013, 1014 auf, die jeweils einem Rad eines nicht näher dargestellten PKW-Fahrzeugs zugeordnet sind und eine Luftfeder des Fahrzeugs bilden.

Des Weiteren weist die Luftfederanlage einen Speicher 1015 zur Speicherung schnellverfügbarer Druckluft für die Bälge 1011, 1012, 1013, 1014 auf. Jene Bälge 1011 bis 1014 sind jeweils in einer von einer Galerie 610 abgehenden Federzweigleitung 601, 602, 603, 604 jeweils einem Magnetventil 1111, 1112, 1113, 1114 vorgeordnet, welches jeweils als Niveauregelventil zum Öffnen oder Schließen einer mit einem Balg 1011 bis 1014 gebildeten Luftfeder dient. Die Magnetventile 1111 bis 1114 in den Federzweigleitungen 601 bis 604 sind als 2/2-Wegeventile in einem Ventilblock 1110 ausgebildet. Einem Speicher 1015 ist in einer Speicherzweigleitung 605 ein Magnetventil 1115 in Form eines weiteren 2/2-Wegeventils als Speicherventil vorgeordnet. Die Magnetventile 1011 bis 1015 sind mittels der Feder- und Speicherzweigleitungen 601 bis 604 bzw. 605 an eine gemeinsame Sammelleitung, nämlich die vorbezeichnete Galerie 610 und dann an die weitere Pneumatikleitung 600 angeschlossen. Die Galerie 610 ist so über die Pneumatikleitung 600 an den Druckluftanschluss 2 der Druckluftversorgungsanlage 1001 pneumatisch angeschlossen. Vorliegend sind die Magnetventile 1111 bis 1115 in einem Ventilblock 1010 mit den fünf Ventilen angeordnet. Die Magnetventile sind in FIG. 1 in einem stromlosen Zustand gezeigt - dabei sind die Magnetventile 1111 bis 1115 als stromlos geschlossene Magnetventile gebildet. Andere, hier nicht gezeigte abgewandelte Ausführungsformen können eine andere Anordnung der Magnetventile realisieren - es können auch weniger Magnetventile im Rahmen des Ventilblocks 1010 genutzt werden.

Zum Befüllen der Pneumatikanlage 1002 werden die den Bälgen 1011 bis 1014 vorgeordneten Magnetventile 1111 bis 1114 und/oder das dem Speicher 1015 vorgeordnete Magnetventil 1115 in eine geöffnete Stellung gebracht.

Gleichwohl ist bei geschlossener Stellung der Magnetventile 1111 bis 1114 bzw. 1115 in der Pneumatikanlage 1001 - aufgrund des vorliegend nicht entsperrten Rückschlagventils 311- eine Betriebsstellung der Pneumatikanlage 1002 entkoppelt von der Druckluftversorgungsanlage 1001 möglich. Mit anderen Worten kann ein Querschalten von Bälgen 1011 bis 1015 (z. B. im Off-Road-Betrieb eines Fahrzeugs) ein Befüllen der Bälge 1011 bis 1015 aus dem Speicher 1015 oder eine Druckmessung in der Pneumatikanlage 1002 über die Galerie 610 vorgenommen werden, ohne dass die Druckluftversorgungsanlage 1001 druckbeaufschlagt wird.

Insbesondere wird die Lufttrockneranordnung 100 aufgrund des vom Druckluftanschluss 2 zur Druckluftzuführung 1 gesperrten Rückschlagventils 311 und des geschlossenen Steuerventils 320 vor unnötiger Beaufschlagung mit Druckluft geschützt.

In vorteilhafter Weise ist also eine Beaufschlagung der Lufttrockneranordnung 100 mit Druckluft nicht bei jeder Betriebsstellung der Pneumatikanlage 1002 vorteilhaft. Vielmehr ist es für eine effektive und schnelle Regeneration der Lufttrockneranlage 100 vorteilhaft, wenn diese ausschließlich im Falle einer Entlüftung der Pneumatikanlage 1002 vom Druckluftanschluss 2 zur Druckluftzuführung 1 vorgenommen wird mit entsperrtem Rückschlagventil 311.

Dazu wird - wie oben erläutert - das Steuerventil 320 in eine geöffnete Schaltstellung gebracht, so dass sowohl das Entlüftungsventil 312 öffnet als auch das Rückschlagventil 311 entsperrt wird. Eine Entlüftung der Pneumatikanlage 1002 kann über die erste Drossel 331, das entsperrte Rückschlagventil 311 unter Regeneration der Lufttrockneranordnung 100 sowie anschließend über die zweite Drossel 332 und das geöffnete Entlüftungsventil 312 zur Entlüftung über den Entlüftungsanschluss 3 erfolgen.

Anders ausgedrückt ist zur gleichzeitigen entsperrenden Betätigung des Rückschlagventils 311 und zum öffnenden Betätigen des Entlüftungsventils 312 ein vom Steuerventil 320 pneumatisch ansteuerbarer Steuerkolben 314 als Doppelrelaiskolben vorgesehen mit einem Relaisentlüftungskörper 314.1 des Entlüftungsventils und einem Relaisentsperrkörper 314.2 für das entsperrbare Rückschlagventil 311. Der Doppelrelaiskolben verdeutlicht vorliegendes Prinzip zum Entsperren des Rückschlagventils 311 und gleichzeitiges Betätigen des Entlüftungsventils 312 über die zwei gekoppelten Betätigungselemente - nämlich über den Relaisentsperrkörper 314.2 und den Relaisentlüftungskörper 314.1- die als einstückiger Doppelrelaiskörper oder in einer Abwandlung auch als separate Körper ausgebildet werden können. Im Rahmen einer besonders bevorzugten Abwandlung einer konstruktiven Realisierung können die vorgenannten Betätigungselemente des Doppelrelaiskolbens als einstückige Bereiche eines Doppelrelaiskolbens, gebildet sein.

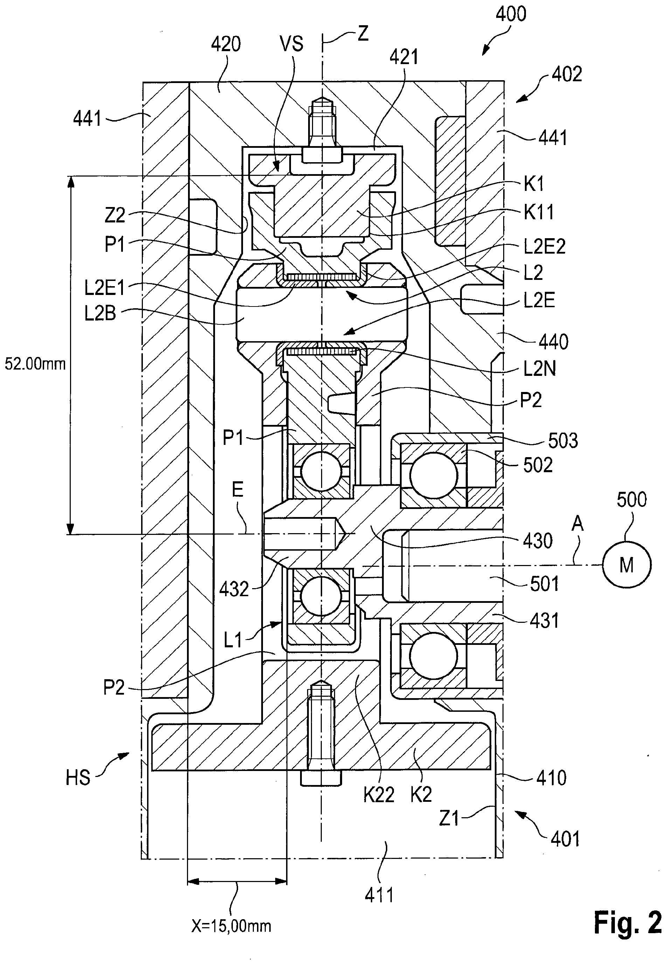

FIG. 2 erläutert nun die Details des Konzepts der Erfindung am Beispiel einer Hubkolbenmaschine speziell in Form des zweistufigen Kolbenkompressors 400 der FIG. 1.

Bezug nehmend auf FIG. 2 zeigt diese eine Hubkolbenmaschine in Form eines Doppelverdichters gemäß dem Detail D der FIG. 1, nämlich einen als zweistufigen Kolbenkompressor 400 ausgeführten TWIN-Kompressor mit einer ersten Verdichterstufe 401 und einer zweiten Verdichterstufe 402 sowie mit einem Motor 500, der als Antriebsmotor M mit einer Antriebswelle 501 an eine Kurbelwelle 430 des Kolbenkompressors 400 gekoppelt ist.

Dazu weist die Kurbelwelle 430 eine Antriebswellenkopplung 431 auf, die als Aufnahme für die Antriebswelle 501 des Antriebsmotors M dient. Die Kurbelwelle 430 ist außenseitig der Antriebswellenkopplung 431 in einem Lager 502 drehbar gelagert, das vorliegend als Ring-Kugellager ausgeführt ist. Das Lager 502 wiederum ist mit einem entsprechenden Haltemechanismus am Motorgehäuse 503 gehalten. Auf diese Weise ist die im Betrieb mittels des Antriebsmotors M antreibbare Kurbelwelle 430 über die genannte Antriebswellenkopplung 431 zum Ankoppeln der Antriebswelle 501 des Antriebsmotors 500 zum Antreiben der Kurbelwelle 430 ausgebildet.

Die Kurbelwelle 430 weist darüber hinaus einen exzentrisch zur Achse A an der Kurbelwelle 430 ausgebildeten exzentrischen Kurbelwellenzapfen 432 auf, der sich entlang einer Exzenterächse erstreckt, welche hier als Wellenachse E bezeichnet ist.

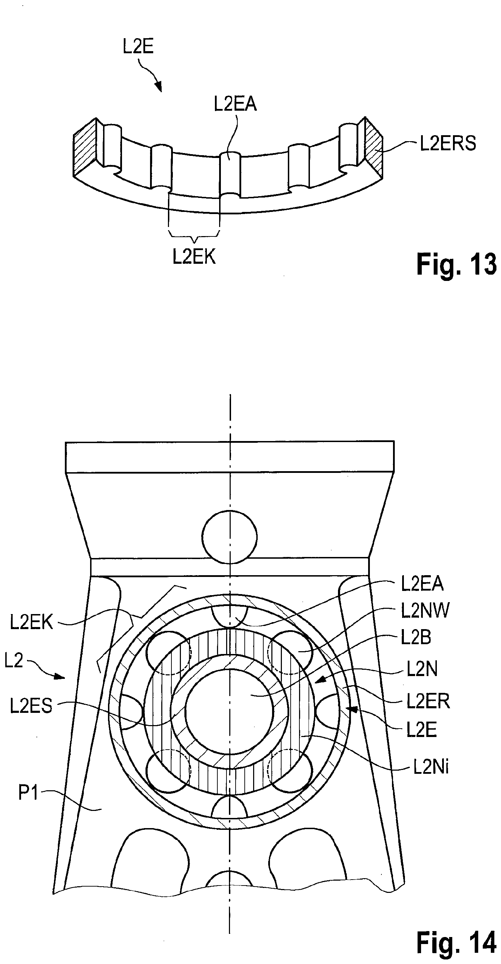

Unter drehendem Antrieb der Kurbelwelle 430 ist der exzentrische Kurbelwellenzapfen 432 damit ausgebildet, ein erstes Pleuel P1 direkt und ein zweites Pleuel P2 indirekt anzutreiben. Dazu ist der exzentrische Kurbelwellenzapfen 432 mittels eines ersten Pleuellager L1 zur direkten Lagerung und zum direkten Antrieb des ersten Pleuels P1 ausgebildet. Das zweite Pleuel P2 wiederum ist an das als Antriebspleuel P1 funktionierende erste Pleuel P1, d. h. als Schlepppleuel, über ein zweites Pleuellager L2 in Form eines Nadellagers L2N und ein Elastomer-Element L2E in Form zweier Elastomer-Buchsen L2E1, L2E2 die einen Lagerbolzen L2B umschließen, bewegbar gelagert. Alternativ kann das Elastomer-Element L2E beispielsweise auch als eine Elastomer-Buchse (nicht gezeigt) ausgeführt sein. Das erste Pleuellager L1 ist als Ring-Kugellager ausgebildet. Das Elastomer-Element L2 in Form der Elastomer-Buchsen L2E1, L2E2 umschließt in diesem Ausführungsbeispiel den Lagerbolzen L2B vollständig entlang seines Umfangs. Alternativ kann das Elastomer-Element L2 beispielsweise in Form von Elastomer-Ringsegmenten L2ERS (vgl. FIG. 13) den Lagerbolzen L2B auch nur teilweise, beispielsweise an der Ober- und Unterseite des Lagerbolzens L2B umschließen. In einem nicht gezeigten Ausführungsbeispiel erstreckt sich das Elastomer-Element L2 in Form von Elastomer-Ringsegmenten L2ERS über ungefähr das obere Viertel des Umfangs und das untere Viertel des Umfangs des Lagerbolzens L2B, so dass die seitlichen Viertel des Lagerbolzens L2B ohne Kontakt zu dem Elastomer-Element L2 sind. Das Elastomer-Element L2 hat große Dämpfungseigenschaften, so dass das Elastomer-Element L2 eine Geräuschreduzierung und eine Reduzierung des Materialverschleißes der Nadellager L2N ermöglicht. Mit dem zweiten Pleuel P2 ist der Lagerbolzen L2B fest verbunden. Hierfür ist der Lagerbolzen L2B an seinen Längsenden mit dem Pleuel P2 über einen Pressverbund verpresst.

Der erste Kolben K1 ist mittels einer Kolbenhalterung K11 als separates Teil in das Kopfende des ersten Pleuels P1 eingesetzt und dort gehalten. Der zweite Kolben K2 ist integral und einstückig am Kopfende K22 des zweiten Pleuels P2 angeformt - also entlang einer Zylinder-Achse Z distal gegenüberliegend dem ersten Kolben K1. Das zweite Pleuel P2 ist dazu als einstückiges, in etwa ringartiges Bauteil - wie in FIG. 2 ersichtlich - am zweiten Pleuellager L2 drehbweglich aufgehängt. Alternativ kann auch der erste Kolben an das erste Pleuel P1 angeformt sein oder der zweite Kolben am zweiten Pleuel P2 gehalten sein (nicht gezeigt).

Bei der in FIG. 2 gezeigten Konstruktion ist unter drehendem Antrieb der Kurbelwelle 430 eine exzentrische Drehbewegung des Kurbelwellenzapfens 432 im Betrieb des Kompressors 400 erreichbar, sodass der erste und zweite Kolben K1, K2 mit einer Hin- und-Her-Bewegung zur Verdichtung von Druckluft in der entsprechenden zweiten und ersten Verdichterstufe 402, 401 jeweils bewegt werden.

Der zweite Kolben K2 der ersten Verdichterstufe 401 bewegt sich dazu in einem Zylinderhubraum 411 des ersten Zylinders 410 in der ersten (Niederdruck-) Verdichterstufe 401. Der erste Kolben K1 bewegt sich dazu in einem Zylinderhubraum 421 eines zweiten Zylinders 420 der zweiten (Hochdruck-) Verdichterstufe 402. Der erste und zweite Zylinder 410, 420 sind Teil eines Gehäuses 440 des gesamten Luftverdichters mit Kolbenkompressor 400, Antriebsmotor M und Kurbelwelle 430. Das Gehäuse 440 des Luftverdichters ist durch weitere Bauteile 441 an dem Gehäuse einer Druckluftversorgungsanlage 1001, wie sie in FIG.1 gezeigt ist, gehalten.

FIG. 2 zeigt den TWIN-Kompressor 400, vorliegend in einer Betriebsstellung, gemäß der der zweite Kolben K2 der (Niederdruck-) Verdichterstufe 401 in einer Hubstellung HS steht, das heißt, die Verdichtung der im Hubraum 411 befindlichen Luft steht bevor. Dagegen befindet sich der erste Kolben K1 der zweiten Verdichterstufe als 402 in einer Verdichtungsstellung VS, das heißt aus der zweiten Hochdruckstufe 402 wird Druckluft verdichtet abführbar zur Druckluftversorgungsanlage 1001.

Die Bewegung des ersten und zweiten Kolbens K1, K2 im Betrieb des Kolbenkompressors 400 erfolgt grundsätzlich entlang der Zylinder-Achse Z. Diese liegt mittensymmetrisch zu Zylinderlaufflächen Z1 beziehungsweise Z2 des ersten beziehungsweise zweiten Zylinderhubraums 411, 421 für den zweiten, beziehungsweise ersten Kolben K2, K1 des ersten beziehungsweise zweiten Zylinders 410, 420. In FIG. 2 ist dazu die Pleuellänge des ersten Pleuels P1 mit 52,00 mm angegeben als Beispiel für die Größenordnung der Hochdruckstufe 420 des Kolbenkompressors 400.

Das erste Pleuels P1 kann beispielsweise auch eine Pleuellänge zwischen 50 und 70 mm, insbesondere eine Pleuellänge von 66 mm haben. Das zweite Pleuel kann beispielsweise eine Pleuellänge zwischen 40 und 60 mm, insbesondere eine Pleuellänge von 53 mm haben. Im Fall einer Pleuellänge des zweiten Pleuels von 53 mm, kann der Abstand zwischen einem Kolbenkopf des Kolbens K2 und dem exzentrischen Kurbelwellenzapfen 432 beispielsweise zwischen 15 und 25 mm, insbesondere 21 mm betragen. Die vorgenannten Dimensionen können einen Auslenkungswinkel der Pleuel zueinander von bis zu 20°, beispielsweise 14°, sowie +/- 7° und insbesondere 7° ermöglichen.

Der Lagerbolzen L2B hat in diesem Ausführungsbeispiel einen Durchmesser von 8 mm und kann Durchmesser zwischen 5 mm und 12 mm haben. Der Durchmesser des Lagerbolzens L2B ist in diesem Ausführungsbeispiel konstant. Der Durchmesser des Lagerbolzens L2B kann sich auch entlang seiner Längsachse ändern. Die maximale Drehzahl beträgt für dieses Ausführungsbeispiel bis zu 2700 Umdrehungen pro Minute, woraus sich eine maximale Gleitgeschwindigkeit von ungefähr 0,14 m/s, insbesondere 0,137 m/s ergibt. Die maximale Drehzahl beträgt bevorzugt zwischen 1500 und 3500 Umdrehungen pro Minute.

Die Zylinder-Achse Z ist so orientiert, dass sie entlang eines Radius um die Wellenachse E (Exzenterachse E) verläuft. Die Wellenachse E verläuft exakt senkrecht zur Zylinder-Achse Z. Das heißt, der exzentrische Kurbelwellenzapfen 432 der Kurbelwelle 430 ist ebenfalls exakt senkrecht zur Zylinder-Achse Z im Kolbenkompressor 400 angeordnet. Ein hinlänglich verlässlicher und dichtender Lauf des zweiten und ersten Kolben K2, K1 in der ersten (Niederdruck-) Verdichterstufe bzw. (Hochdruck-) Verdichterstufe 401, 402 ist somit aufgrund der Laufrichtung der Kolben K2, K1 ebenfalls entlang der Zylinder-Achse Z gewährleistet.

Dazu wird die Anordnung des ersten Pleuels P1 mit Kolben K1 beziehungsweise des zweiten Pleuels P2 mit Kolben K2 unter Lagerung derselben mittels dem ersten Pleuellager L1 beziehungsweise des zweiten Pleuellagers L2 exakt entlang der Zylinder-Achse Z vorgenommen; beispielsweise mit einem Montagemaß von X = 15,00 mm.

Im Ergebnis wird eine Hubkolbenmaschine in Form eines TWIN-Kompressors 400 mit erster und zweiter Verdichterstufe 401, 402 zur Verfügung gestellt, bei dem das erste Pleuel P1 der zweiten, nämlich (Hochdruck-) Verdichterstufe 402 gebildet ist, wobei das erste Pleuel P1 mittels dem Pleuellager L1 direkt am Kurbelwellenzapfen 432 gelagert ist - das heißt als Antriebspleuel - und das zweite Pleuel P2 der ersten, hier (Niederdruck-) Verdichterstufe 401 gebildet ist, wobei das zweite Pleuel P2 mittels dem zweiten Pleuellager L2 indirekt am Kurbelwellenzapfen 432, das heißt direkt am ersten Pleuel P1 - also als Schlepppleuel am Antriebspleuel- gelagert ist.

Die vorbeschriebenen Ausführungsformen mit Antriebspleuel und Schlepppleuel erweisen sich zwar als besonders vorteilhaft für einen TWIN-Kompressor. Das Konzept der Erfindung ist jedoch nicht darauf beschränkt.

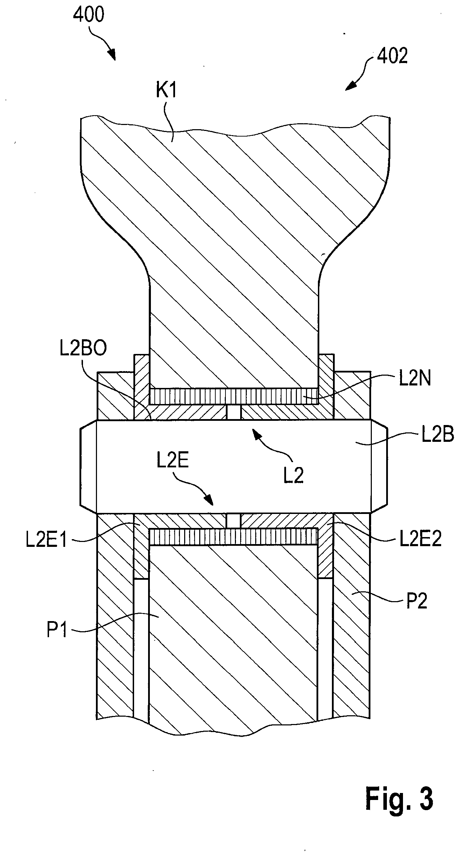

Fig. 3 zeigt einen Ausschnitt eines weiteren Ausführungsbeispiels einer Hubkolbenmaschine in Form eines zweistufigen Kolbenkompressors 400.

Der Kolbenkompressor 400 weist ein erstes Pleuel P1 und ein zweites Pleuel P2 auf, die drehbeweglich um einen Lagerbolzen L2B sind. Der Lagerbolzen L2B ist aus Stahl und im Bereich seiner beiden Längsenden im zweiten Pleuel P2 durch einen Pressverbund fixiert. Auf einer Lagerbolzenoberfläche L2BO des Lagerbolzen L2B sind zwei Elastomer-Elemente L2E in Form von zwei Elastomer-Buchsen L2E1 und L2E2 verpresst.

Die Elastomer-Buchsen L2E1 und L2E2 sind in diesem Ausführungsbeispiel aus einem Kunststoff mit guten Dämpfungseigenschaften. Die Elastomer-Buchsen L2E1 und L2E2 ermöglichen durch ihre dämpfenden Eigenschaften ein leiseres Betriebsgeräusch. In diesem Ausführungsbeispiel berühren sich die Elastomer-Buchsen L2E1 und L2E2 nicht. Alternativ können sich die Elastomer-Buchsen L2E1 und L2E2 auch derart über die Lagerbolzenoberfläche L2BO entlang der Längsachse des Lagerbolzens L2B erstrecken, dass sie sich berühren (nicht gezeigt). Weiterhin kann auch ein Elastomer-Element L2E in Form einer sich über den Lagerbolzen L2B erstreckenden Elastomer-Buchse angeordnet sein, so dass er den Teil der Lagerbolzenoberfläche L2BO vollständig umschließt, der im Abschnitt des ersten Pleuels P1 liegt (nicht gezeigt).

Auf die zwei Elastomer-Buchsen L2E1 und L2E2 ist ein Innenring eines Nadellagers L2N verpresst. Der Außenring des Nadellagers L2N ist im ersten Pleuel P1 verpresst.

Die Elastomer-Buchsen L2E1 und L2E2 haben des Weiteren jeweils einen Bund, der das Nadellager L2N umschließt bzw. einhaust und abdichtet, so dass Schmiermittel, wie beispielsweise Schmierfett, Schmieröl oder dergleichen nicht aus dem Nadellager L2N heraustreten kann. Dazu erhöht der Bund der Elastomer-Buchsen L2E1 und L2E2 die dämpfenden Eigenschaften der Elastomer-Buchsen L2E1 und L2E2.

Der Außenring des Nadellagers L2N hat in diesem Ausführungsbeispiel Walzen bzw. Nadeln, die im Betrieb der Hubkolbenmaschine in Form des zweistufigen Kolbenkompressors 400 auf der Außenoberfläche des Innenrings des Nadellagers L2N laufen. Das Nadellager L2N dient dazu das erste Pleuel P1 zu lagern.

Die Verwendung der Elastomer-Buchsen L2E1 und L2E2 mit dem Nadellager L2N kombiniert den Vorteil des Nadellagers, nämlich die lange Lebensdauer mit dem Vorteil des Gleitlagers, nämlich die geringere Lautstärke beim Betrieb.

In einem nicht gezeigten und weniger bevorzugten Ausführungsbeispiel kann das Nadellager L2N auch ohne Innenring ausgeführt sein. In diesem Fall laufen die Walzen bzw. Nadeln des Außenrings des Nadellagers L2N auf den Elastomer-Buchsen L2E1 und L2E2. Dies ermöglicht es zwar die Lautstärke beim Betrieb zu senken, erhöht jedoch dafür den Verschleiß. Weiterhin kann alternativ auch der Innenring des Nadellagers L2N ein Elastomer-Innenring bzw. eine Elastomer-Buchse sein, auf dem die Walzen des Außenrings des Nadellagers L2N im Betrieb laufen (nicht gezeigt).

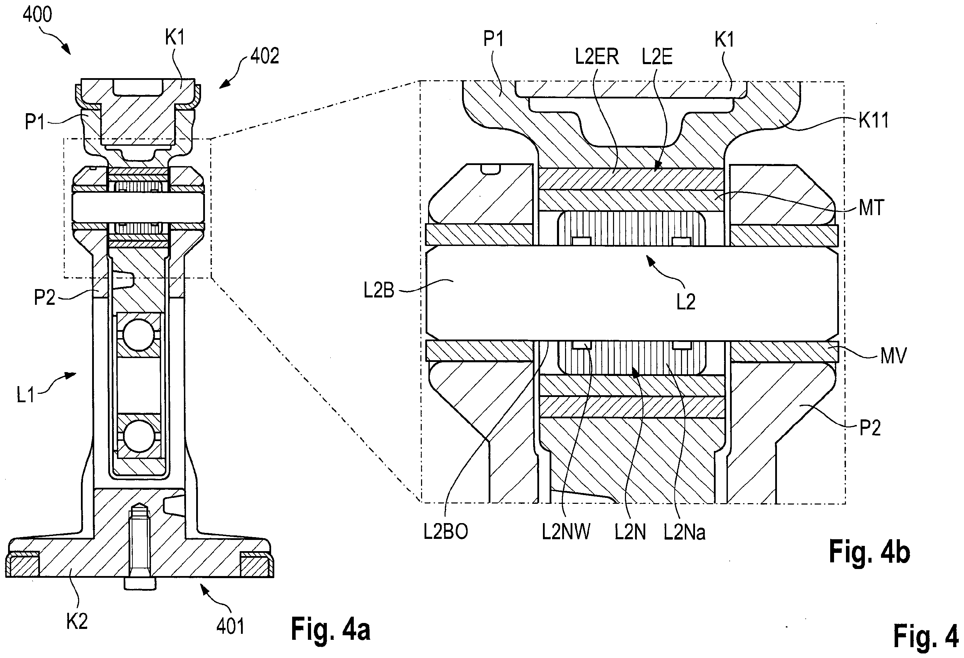

FIG. 4a zeigt einen Ausschnitt einer Hubkolbenmaschine in Form eines zweistufigen Kolbenkompressors 400 mit einem ersten Pleuel P1 für einen ersten Kolben K1 einer zweiten (Hochdruck)-Stufe 402 und einem zweiten Pleuel P2 mit einem zweiten Kolben K2 einer ersten (Niederdruck)-Stufe 401. Das erste Pleuel P1 weist ein erstes Pleuellager L1 auf. Der erste Kolben K1 ist in diesem Ausführungsbeispiel von der Kolbenhalterung K11 gehalten (s. FIG. 4b), kann aber auch in einem alternativen Ausführungsbeispiel an das Pleuel P1 angeformt sein.

In dem in FIG. 4b gezeigten Detail des Kolbenkompressors 400 ist ein zweites Pleuellager L2 gezeigt. Das zweite Pleuellager L2 hat einen Außenring L2Na eines Nadellagers L2N, der um einen Lagerbolzen L2B angeordnet ist. Die Walzen L2NW des Nadellagers L2N laufen im Betrieb des Kolbenkompressors 400 auf einer Lagerbolzenoberfläche L2BO des Lagerbolzens L2B. Alternativ kann das Nadellager L2N anstatt Walzen auch Rollen, Nadeln oder dergleichen aufweisen.

Der Außenring L2Na des Nadellagers L2N ist über einen Metallträger MT in Form einer inneren Metallhülse MTi mit einem Elastomer-Element L2E in Form eines ElastomerRinges L2ER verbunden, der zwischen den Metallträger MT in Form der inneren Metallhülse MTi und eine Pleuelinnenoberfläche des Pleuels P1 gepresst ist. Alternativ kann der Elastomer-Ring L2ER auch beidseitig von Metallträgern umschlossen sein, beispielsweise von einer inneren Metallhülse und einer äußeren Metallhülse (nicht gezeigt). Weiterhin kann der Metallträger MT auch um den Elastomer-Ring L2ER herum als äußere Metallhülse MTa zwischen Elastomer-Ring L2ER und Pleuelinnenoberfläche des ersten Pleuels P1 angeordnet sein (nicht gezeigt). Des Weiteren kann das Elastomer-Element L2E auch als Elastomer-Schicht zwischen die innere Metallhülse MTi und die Pleuelinnenoberfläche des zweiten Pleuels P2 eingespritzt sein (nicht gezeigt). Das Elastomer-Element L2E kann auch als Elastomer-Ring L2ER ohne Metallträger MT direkt zwischen Außenring L2Na des Nadellagers L2N und Pleuelinnenoberfläche des zweiten Pleuels P2 eingepresst sein (nicht gezeigt). Der Elastomer-Ring L2ER dient dazu die von den Walzen bzw. Nadeln erzeugten Geräusche zu dämpfen.

Der Lagerbolzen L2B ist des Weiteren über Metallpressverbindungselemente MV in einer Metallpressverbindung fest mit dem zweiten Pleuel P2 verbunden.

Die Härte und weitere Materialeigenschaften des Elastomer-Elements L2E in Form des Elastomer-Rings L2ER hängen von dem verwendeten Material des Elastomers ab. Der Elastomer-Ring L2ER in diesem Ausführungsbeispiel ist aus Gummi bzw. aus einer Gummimischung. Alternativ kann auch ein andere elastisches Material mit guten Dämpfungseigenschaften verwendet werden. Die Höhe, Breite, Länge, Wanddicke und der Durchmesser des Elastomer-Rings L2ER sind frei wählbar und dienen dazu die Eigenschaften des Elastomer-Rings L2ER einzustellen. Bevorzugt sind die vorgenannten Parameter auf die Betriebsbedingungen und den Kolbenkompressor 400 angepasst. Dies dient insbesondere dazu die dämpfenden und/oder federnden Eigenschaften des Elastomer-Rings L2ER optimal auf die Betriebsbedingungen anzupassen und somit eine optimale Geräuschverringerung zu ermöglichen.

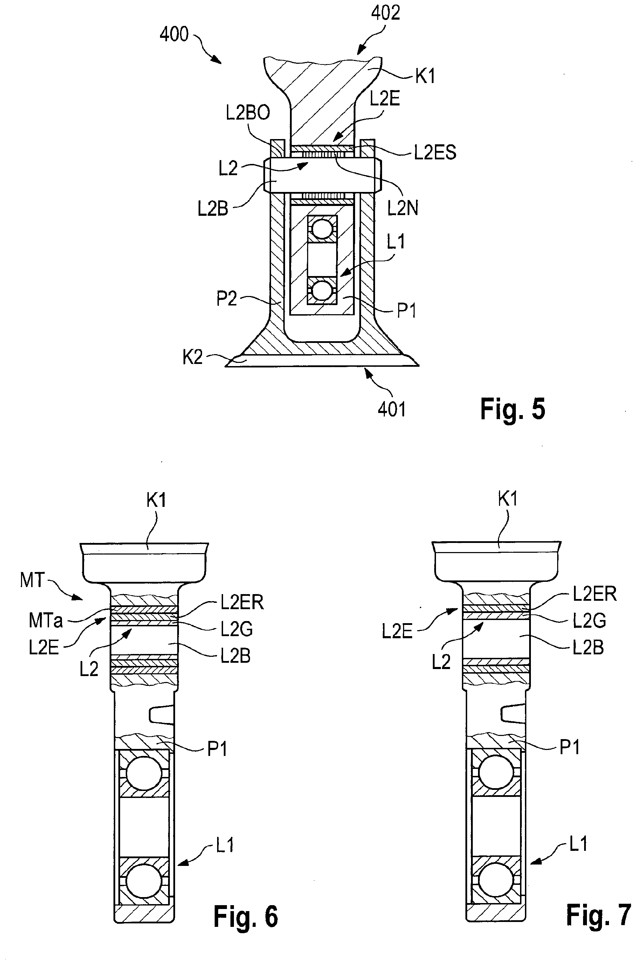

FIG. 5 zeigt eine Hubkolbenmaschine in Form eines zweistufigen Kolbenkompressors 400 mit einem ersten Pleuel P1 und einem zweiten Pleuel P2, die über einen Lagerbolzen L2B miteinander verbunden und um diesen herum drehbeweglich sind. Der Lagerbolzen L2B ist im Bereich seiner Längsenden fest durch einen Pressverbund mit dem zweite Pleuel P2 verbunden.

Das erste Pleuel P1 hat einen angeformten ersten Kolben K1 für eine zweite (Hochdruck-)Verdichterstufe 402 und das zweite Pleuel P2 hat einen angeformten zweiten Kolben K2 für eine erste (Niederdruck-)Verdichterstufe 401.

Ein erstes Pleuellager L1 dient dazu einen exzentrischen Kurbelwellenzapfen 432 zu lagern, der unter drehendem Antrieb einer Kurbelwelle 430 das erste Pleuel P1 direkt und das zweite Pleuel P2 indirekt antreiben kann (nicht gezeigt).

Das erste Pleuel P1 ist über ein zweites Pleuellager L2 in Form eines Nadellager L2N und einem Elastomer-Element L2E in Form einer Elastomer-Schicht L2ES mit dem Lagerbolzen L2B verbunden. Die Elastomer-Schicht L2ES ist direkt auf den Außenring des Nadellagers L2N aufvulkanisiert und mit dem ersten Pleuel P1 verpresst.

Das direkte Aufvulkanisieren ermöglicht es ein zusätzliches Bauteil, beispielsweise eine Metallbuchse einzusparen. Die Elastomer-Schicht L2ES dient dazu eine Auslenkung der Pleuel P1 und P2 zueinander zu ermöglichen und dabei die Körperschalleinleitung in weitere Bauteile zu verringern, indem das Elastomer diese Energie aufnimmt. Die Aufschlaggeschwindigkeiten der Pleuel P1 und P2 bei der Auslenkung zueinander in den Kraftumschlagspunkten wird durch das Elastomer-Element L2E gedämpft an folgende Bauteile weitergeben. Das Nadellager L2N wird abwechselnd radial auf Zug und Druck belastet. Zwischen den beiden Maximas gibt es einen kraftfreien Zeitpunkt, in dem das Pleuellagerspiel überbrückt wird. Je größer dieses Pleuellagerspiel ist, desto mehr Laufgeschwindigkeit bzw. Schwung ist in den Pleueln P1 und P2 beim Erreichen des entgegengesetzten Druck- bzw. Zugpunkts vorhanden und umso stärker ist der Anschlag, der vom Elastomer-Element L2E gedämpft wird. Durch die Verwendung des Elastomer-Elements L2E verringern sich also die Körperschallanregungen im gesamten Kolbenkompressor 400.

Alternativ kann für das zweite Pleuellager L2 anstatt des Nadellagers L2N auch ein Gleitlager, ein Kugellager oder ein Tonnenlager verwendet werden (nicht gezeigt). Das Gleitlager ist bevorzugt ein Metall-Gleitlager. Auf jedes der alternativen zweiten Pleuellager L2 kann auch eine Elastomer-Schicht L2ES aufvulkanisiert werden oder alternativ kann ein Elastomer-Ring L2ER dieses umgeben (nicht gezeigt). Alternativ kann auch ein Innenring L2Ni eines Nadellagers L2N in Form einer Nadelhülse mit Walzen bzw. Nadeln auf einer Außenoberfläche des Innenrings L2Ni um den Lagerbolzen L2B herum angeordnet werden. In diesem Fall ist bevorzugt eine innere Metallhülse MTi um den Innenring L2Ni herum angeordnet, deren Innenoberfläche als Lauffläche für die Walzen bzw. Nadeln des Innenrings L2Ni des Nadellagers L2N dient. Die innere Metallhülse MTi ist in diesem Fall über das Elastomer-Element L2E mit dem ersten Pleuel P1 verbunden. Bevorzugt ist das Elastomer-Element L2E auch in diesem Fall eine aufvulkanisierte Elastomer-Schicht L2ES. Das Elastomer-Element L2E kann aber auch in Form eines Elastomer-Rings L2ER verwendet werden.

In einem nicht gezeigten Ausführungsbeispiel erstreckt sich das Elastomer-Element L2E entlang der Längsachse des Lagerbolzens L2B über die gesamte zwischen dem Pleuel P2 liegende Lagerbolzenoberfläche L2BO des Lagerbolzens L2B. Hierdurch können Anschlag- oder Anlaufscheiben eingespart werden, die dazu dienen das Anschlagen der Pleuel aneinander in Richtung der Längsachse des Lagerbolzens L2B zu verhindern. Diese Aufgabe übernimmt in dem nicht gezeigten Ausführungsbeispiel das sich über die Lagerbolzenoberfläche L2BO erstreckende Elastomer-Element L2E. Weiterhin dient das sich über die Lagerbolzenoberfläche L2BO erstreckende Elastomer-Element L2E zur Abdichtung des zweiten Pleuellagers L2, so dass Schmiermittel, wie beispielsweise Schmierfett, Schmieröl oder dergleichen, nicht austreten kann. Es wird weiterhin eine bessere Dämpfung der Lautstärke ermöglicht.

FIG. 6 zeigt ein erstes Pleuel P1 für einen zweistufigen Kolbenkompressor. An das Pleuel P1 ist an einem Längsende des Pleuels P1 ein erster Kolben K1 angeformt. Im Bereich des anderen Längsendes des Pleuels P1 ist ein erstes Pleuellager L1 angeordnet, das dazu dient einen exzentrischen Kurbelwellenzapfen 432 zu lagern, der unter drehendem Antrieb einer Kurbelwelle 430 das erste Pleuel P1 direkt antreiben kann (nicht gezeigt).

Das erste Pleuel P1 hat ein zweites Pleuellager L2 in Form eines Gleitlagers L2G, in diesem Ausführungsbeispiel eine Gleitlagerbuchse, die zwischen einer Pleuelinnenoberfläche des ersten Pleuels P1 und einem Lagerbolzen L2B angeordnet ist. Das Gleitlager L2G wird von einem Elastomer-Element L2E in Form eines Elastomer-Rings L2ER umschlossen und gedämpft. Alternativ kann auch eine Elastomer-Schicht zur Dämpfung des Gleitlagers L2G verwendet werden (nicht gezeigt). Der Elastomer-Ring L2ER wird von einem Metallträger MT in Form einer äußeren Metallhülse MTa umschlossen, die mit der Pleuelinnenoberfläche des ersten Pleuels P1 verpresst ist. Die Metallhülse MTa ist in diesem Ausführungsbeispiel ein Messing-Ring. Das Elastomer-Element L2E ist in diesem Ausführungsbeispiel aus Gummi bzw. einer Gummimischung mit guten Dämpfungseigenschaften.

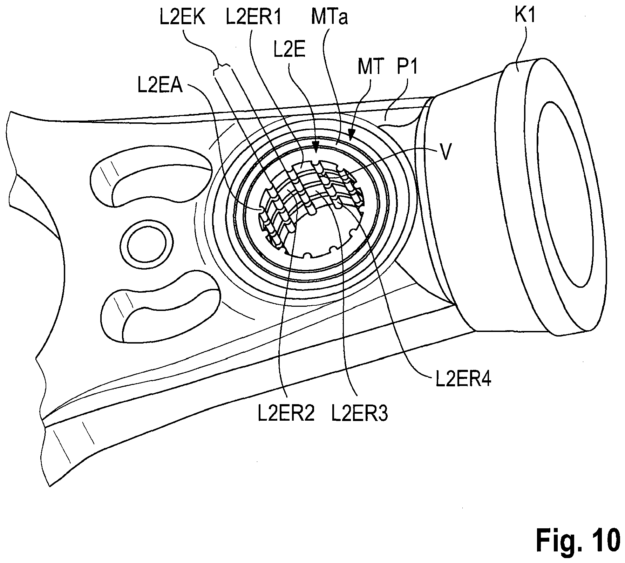

In einem nicht gezeigten Ausführungsbeispiel ist eine Elastomer-Schicht auf die äußere Metallhülse MTa aufgebracht, insbesondere aufgespritzt, aufvulkanisiert oder dergleichen (nicht gezeigt). Das Elastomer-Element L2E kann mit einer progressiven Feder-Kennlinie ausgelegt sein (nicht gezeigt). Des Weiteren kann das Elastomer-Element L2E Auswölbungen L2EA aufweisen, die dazu dienen das Gleitlager L2G zusätzlich zu federn (vgl. Fig. 10, 11, 13).

Die Verwendung eines Gleitlagers L2G ermöglicht es eine größere Auflagefläche zu erzielen und dadurch die Flächenbelastung zu verringern. Dadurch, dass das Gleitlager L2G von außen gedämpft wird, das Elastomer-Element L2E also um das Gleitlager L2G herum angeordnet ist, kommt es zu einer besseren Körperschallübertragung in das Elastomer-Element L2E. Das Elastomer-Element L2E dient dann dazu die Lautstärke zu verringern. Das Elastomer-Element L2E ermöglicht es des Weiteren ein Pleuellagerspiel auszugleichen. Dies ermöglicht einen geringeren Flächenabrieb und somit eine höhere Lebensdauer. Die Kosten für ein Gleitlager L2G können geringer sein als für Wälzlager, wie beispielsweise Nadellager, Kugellager, Tonnenlager oder dergleichen.

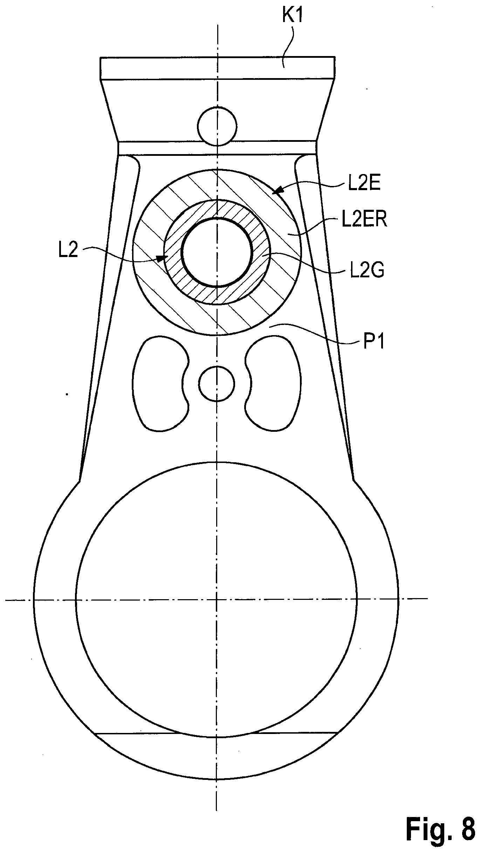

FIG. 7 zeigt ein weiteres Ausführungsbeispiel eines ersten Pleuels P1 für einen zweistufigen Kolbenkompressor in einer Schnittansicht. Das erste Pleuel P1 der FIG. 7 ist bis auf die Komponenten im Bereich des zweiten Pleuellagers L2 im Wesentlichen identisch mit dem ersten Pleuel P1 der FIG. 6. An das Pleuel P1 ist an einem Längsende des Pleuels P1 ein erster Kolben K1 angeformt. Im Bereich des anderen Längsendes des Pleuels P1 ist ein Pleuellager L1 angeordnet, das dazu dient einen exzentrischen Kurbelwellenzapfen 432 zu lagern, der unter drehendem Antrieb einer Kurbelwelle 430 das erste Pleuel P1 direkt antreiben kann (nicht gezeigt). FIG. 8 zeigt das erste Pleuel der Fig. 7 in einer Seitenansicht ohne ein eingebautes erstes Pleuellager L1.

Im Unterschied zum ersten Pleuel P1 aus FIG. 6 hat das erste Pleuel P1 der FIG. 7 keine äußere Metallhülse. Anstatt dessen ist zwischen Pleulinnenoberfläche des ersten Pleuels P1 und dem Lagerbolzen L2B ein Elastomer-Element L2E in Form eines Elastomer-Rings L2ER und ein Pleuellager L2 in Form eines Gleitlagers L2G angeordnet. Der Elastomer-Ring L2ER ist zwischen Pleuelinneroberfläche des ersten Pleuels P1 und dem Gleitlager L2G verpresst. Das Gleitlager L2G ist hier eine Gleitlagerbuchse, die um den Lagerbolzen L2B herum angeordnet ist und eine Lagerung des ersten Pleuels P1 um den Lagerbolzen L2B ermöglicht.

Alternativ kann anstatt des Elastomer-Rings L2ER auch eine Elastomer-Schicht L2ES (nicht gezeigt) verwendet werden, die beispielsweise auf die Pleuelinnenoberfläche des ersten Pleuels P1 aufgespritzt, aufvulkanisiert oder dergleichen werden kann. Weiterhin können anstatt des Elastomer-Rings L2ER auch mehrere Elastomer-Ringsegmente L2ERS zwischen Gleitlager L2G und Pleuelinnenoberfläche des ersten Pleuels P1 angeordnet werden (nicht gezeigt). Insbesondere können zwei halbringförmige Elastomer-Ringsegmente L2ERS zur Dämpfung verwendet werden (nicht gezeigt).

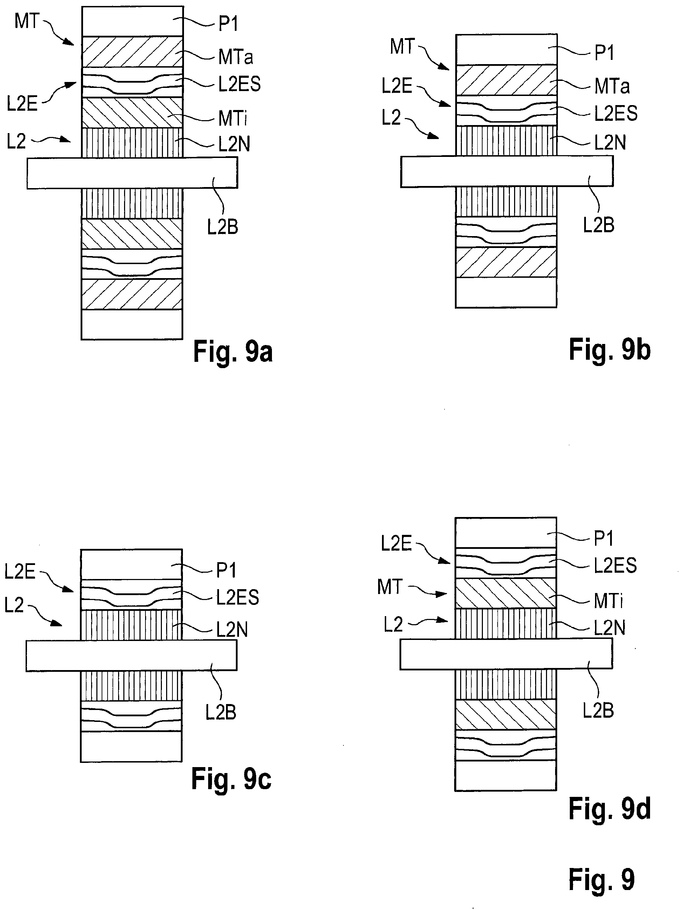

Die schematischen Darstellungen in den Figuren 9a, 9b, 9c und 9d zeigen Schichtungsstruktur im Bereich des zweiten Pleuellagers L2. Weitere Komponenten des ersten Pleuels P1 sind in den Figuren 9a, 9b, 9c und 9d obwohl sie vorhanden sind zur besseren Übersichtlichkeit nicht dargestellt. Die Figuren 9a, 9b, 9c und 9d zeigen, dass verschiedene Schichtungen des Elastomer-Elements L2E und der Metallträger MT zwischen Lagerbolzen L2B und einer Pleuelinnenoberfläche des ersten Pleuels P1 möglich sind.

Die in den Figuren 9a, 9b, 9c und 9d gezeigten Pleuellager L2 jeweils in Form eines Nadellagers L2N weisen Au ßenring und Innenring auf. Alternativ können sie auch lediglich einen Außenring oder einen Innenring aufweisen. Diese können beide Rollen, Walzen bzw. Nadeln aufweisen, die im Betrieb auf einer der jeweiligen Walze bzw. Nadel gegenüberliegenden Oberfläche laufen können. Die Walzen bzw. Nadeln können also im Betrieb auf einer Außenoberfläche des Innenrings des Nadellagers L2N, einer Innenoberfläche des Außenrings des Nadellagers L2N, einer Lagerbolzenoberfläche, einer Innenoberfläche einer inneren Metallhülse MTi oder einer Innenoberfläche einer Elastomer-Schicht L2ES laufen. Der Außenring und der Innenring können jeweils auch Nadelkränze sein, so dass diese auf ihrer Außenoberfläche und Innenoberfläche Walzen bzw. Nadeln aufweisen, die auf den an den Walzen bzw. Nadeln angrenzenden Oberfläche laufen können.

FIG. 9a zeigt einen Ausschnitt eines ersten Pleuels P1 mit einem zweiten Pleuellager L2 in Form eines Nadellagers L2N, einem Metallträger MT in Form einer inneren Metallhülse MTi, einem Elastomer-Element L2E in Form einer Elastomer-Schicht L2ES und einem Metallträger MT in Form einer äußeren Metallhülse MTa, die um einen Lagerbolzen L2B herum zwischen dem Lagerbolzen L2B und dem ersten Pleuel P1 angeordnet sind.

FIG. 9b zeigt einen Ausschnitt eines ersten Pleuels P1 mit einem zweiten Pleuellager L2 in Form eines Nadellagers L2N, einem Elastomer-Element L2E in Form einer Elastomer-Schicht L2ES und einem Metallträger MT in Form einer äußeren Metallhülse MTa, die um einen Lagerbolzen L2B herum zwischen dem Lagerbolzen L2B und dem ersten Pleuel P1 angeordnet sind.

FIG. 9c zeigt einen Ausschnitt eines ersten Pleuels P1 mit einem zweiten Pleuellager L2 in Form eines Nadellagers L2N und einem Elastomer-Element L2E in Form einer Elastomer-Schicht L2ES, die um einen Lagerbolzen L2B herum zwischen dem Lagerbolzen L2B und dem ersten Pleuel P1 angeordnet sind.

FIG. 9d zeigt einen Ausschnitt eines ersten Pleuels P1 mit einem zweiten Pleuellager L2 in Form eines Nadellagers L2N, einem Metallträger MT in Form einer inneren Metallhülse MTi und einem Elastomer-Element L2E in Form einer Elastomer-Schicht L2ES, die um einen Lagerbolzen L2B herum zwischen dem Lagerbolzen L2B und dem ersten Pleuel P1 angeordnet sind.

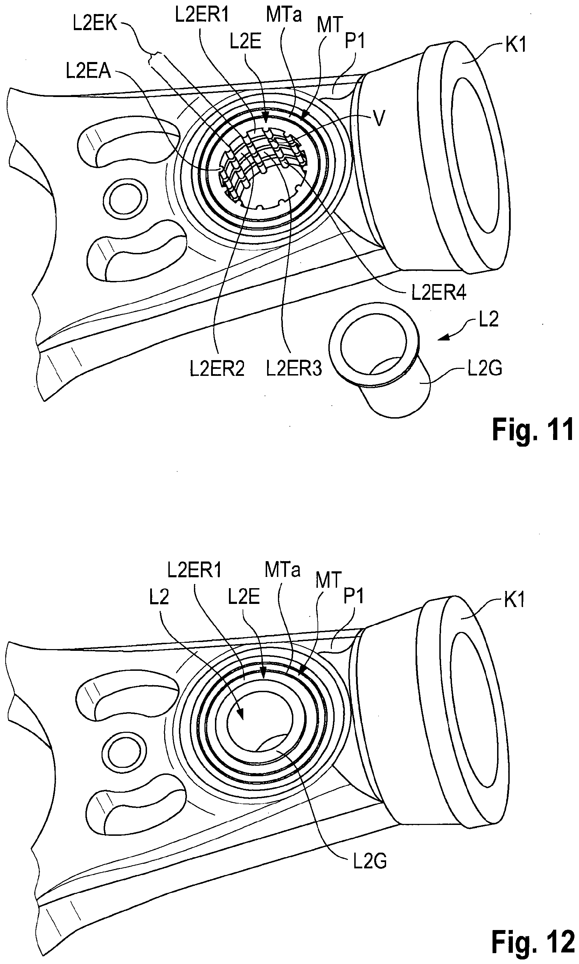

FIG. 10 zeigt eine erste perspektivische Darstellung eines ersten Pleuels P1 mit einem angeformten ersten Kolben K1 und einem im ersten Pleuel P1 angeordneten Metallträger MT in Form einer äußeren Metallhülse MTa und vier Elastomer-Elementen L2E in Form jeweils eines Elastomer-Rings L2ER1, L2ER2, L2ER3, L2ER4. Im Betrieb ist ein zweites Pleuellager L2 in Form eines Gleitlagers L2G innerhalb der Elastomer-Ringe L2ER1, L2ER2, L2ER3 und L2ER4 angeordnet (vgl. FIG. 11 und 12). FIG. 11 zeigt eine zweite perspektivische Darstellung des ersten Pleuels der FIG. 10, bei dem das Gleitlager L2G neben dem ersten Pleuel P1 liegt. FIG. 12 zeigt eine dritte perspektivische Darstellung des ersten Pleuels P1, bei dem das zweite Pleuellager L2 in Form des Gleitlagers L2G innerhalb der Elastomer-Elemente L2E in Form der Elastomer-Ringe L2ER1, L2ER2, L2ER3 und L2ER4 angeordnet ist.

Die Elastomer-Ringe L2ER1, L2ER2, L2ER3 und L2ER4 weisen Elastomer-Auswölbungen L2EA entlang ihres Umfangs auf. Die Elastomer-Auswölbungen L2EA haben konstante Winkel-Abstände zueinander, so dass sich gleich große Kammern L2EK zwischen den Elastomer-Auswölbungen L2EA bilden, wenn das Gleitlager L2G innerhalb der Elastomer-Ringe L2ER1, L2ER2, L2ER3 und L2ER4 angeordnet ist. Innerhalb der Kammern L2EK ist ein Schmiermittel, beispielsweise Schmierfett, Schmieröl oder ein anderes reibungsreduzierendes Mittel, geführt, um die Gleiteigenschaften des Gleitlagers L2G zu verbessern. Die Elastomer-Ringe L2ER1, L2ER2, L2ER3 und L2ER4 haben in diesem Ausführungsbeispiel entlang der Längsachse des Lagerbolzens L2B (nicht gezeigt) einen Abstand zueinander, so dass sich zwischen den Elastomer-Ringen L2ER1, L2ER2, L2ER3 und L2ER4 zusätzliche Volumina V bilden, in denen das Schmiermittel direkt im Kontakt mit dem Gleitlager L2G steht, wenn dieses innerhalb der Elastomer-Ringe L2ER1, L2ER2, L2ER3 und L2ER4 angeordnet ist.

Anstatt vier Elastomer-Elementen L2E kann auch nur ein Elastomer-Element L2E oder können auch zwei, drei, fünf oder mehr Elastomer-Elemente L2E entlang der Längsachse des Lagerbolzens L2B angeordnet sein (nicht gezeigt). Es können auch anstatt Elastomer-Ringen L2ER1, L2ER2, L2ER3, und L2ER4 Elastomer-Ringsegmente L2ERS (s. FIG. 13) um den Umfang der Lagerbolzens L2B (nicht gezeigt) herum angeordnet sein. Insbesondere können mehrere Elastomer-Ringsegmente L2ERS das Gleitlager L2G bezüglich dessen Umfang vollständig oder nur teilweise umschließen.

Die Elastomer-Auswölbungen L2EA sind in diesem Ausführungsbeispiel aus demselben Material wie der jeweilige Ringkörper des jeweiligen Elastomer-Rings L2ER1, L2ER2, L2ER3 und L2ER4. Alternativ können die Elastomer-Auswölbungen L2EA auch aus einem Elastomermaterial mit größeren Federungseigenschaften als der des Ringkörpers der Elastomer-Ringe L2ER1, L2ER2, L2ER3 und L2ER4 sein. In diesem Fall dienen die Ringkörper der Elastomer-Ringe L2ER1, L2ER2, L2ER3 und L2ER4 im Wesentlichen zur Dämpfung, während die Elastomer-Auswölbungen L2EA zur Federung dienen.

In einem alternativen Ausführungsbeispiel sind die Elastomer-Ringe L2ER1, L2ER2, L2ER3 und L2ER4 mit einer progressiven Feder-Kennlinie ausgeführt.

FIG. 13 zeigt ein Elastomer-Element L2E in Form eines Elastomer-Ringsegment L2ERS mit Elastomer-Auswölbungen L2EA und zwischen den Elastomer-Auswölbungen L2EA gebildeten Kammern L2EK.

Die Länge des Elastomer-Ringsegments L2ERS ist variabel. Es können mehrere Elastomer-Ringsegmente entlang eines Umfangs oder in mehreren Schichten zwischen einem Lagerbolzen L2B und einer Pleuelinnenoberfläche eines ersten Pleuels P1 angeordnet werden, um ein zweites Pleuellager L2 zu dämpfen und/oder zu federn (nicht gezeigt).

FIG. 14 zeigt ein erstes Pleuel P1, das mittels einem zweiten Pleuellager L2 um einen Lagerbolzen L2B herum gelagert ist.

Ein Elastomer-Element L2E in Form einer Elastomer-Schicht L2ES ist zwischen Lagerbolzen L2B und Innenring L2Ni eines Nadellagers L2N eingespritzt und verbindet diese miteinander. Der Innenring L2Ni hat Walzen L2NW, die auf einer Elastomer-Innenoberfläche eines Elastomer-Elements L2E in Form eines Elastomer-Rings L2ER laufen. Das Elastomer-Element L2E in Form eines Elastomer-Rings L2ER weist auf seiner Elastomer-Innenoberfläche Auswölbungen L2EA auf, die als Anschläge wirken und Kammern L2EK bilden. Die Elastomer-Auswölbungen L2EA dienen zusammen mit dem Walzenabstand der Walzen L2NW des Innenrings L2Ni des Nadellagers L2N dazu die Auslenkung des Lagerbolzens L2B zum ersten Pleuel P1 zu begrenzen. In diesem Ausführungsbeispiel ist eine Auslenkung von 14° bzw. +/- 7° möglich. Das Elastomer-Element L2E ist mit der Pleuelinnenoberfläche des ersten Pleuels P1 durch eine Pressverbindung fest verbunden.

Das Ausführungsbeispiel weist sowohl ein Elastomer-Element L2E in Form eines separaten Teils, in diesem Fall einem Elastomer-Ring L2ER auf, als auch eine Elastomer-Schicht L2ES. Alternativ könnten auch zwei Elastomer-Schichten oder zwei separate Teile, beispielsweise zwei Elastomer-Ringe verwendet werden. Es könnte auch nur eine Elastomer-Schicht L2ES oder ein Elastomer-Element L2E in Form eines Elastomer-Rings verwendet werden. Die eine Elastomer-Schicht und der eine Elastomer-Ring können in diesem Fall entweder innerhalb oder außerhalb des Innenrings L2Ni des Nadellagers L2N angeordnet sein, so dass dessen Walzen L2NW im Betrieb entweder auf einem von diesen oder auf einer Pleuelinnenoberfläche des ersten Pleuels P1 laufen (nicht gezeigt).

### Bezugszeichenliste (Bestandteil der Beschreibung)

- 0: Luftzuführung, Ansaugung
- 0.1: Filterelement, Luftfilter
- 1: Druckluftzuführung
- 2: Druckluftanschluss
- 3: Entlüftungsanschluss
- 3.1: Entlüftungsfilter, Filterelement, Schalldämpfer
- 100: Lufttrockneranordnung
- 101: Trockenbehälter

- 200: Pneumatikhauptleitung
- 201: erster Teil der Pneumatikhauptleitung
- 202: zweiter Teil der Pneumatikhauptleitung
- 230: Zweigleitung, Entlüftungsleitung
- 240: weitere Entlüftungsleitung
- 241: weiterer Zweiganschluss
- 242: Anschlussabschnitt
- 250: pneumatische Steuerleitung
- 251: Leitungsabschnitt
- 252: Steueranschluss

- 260: weitere Entlüftungsleitung
- 261: Zweiganschluss
- 270: Luftzuführungsleitung
- 300: Ventilanordnung, Magnetventilanordnung
- 310: Wegeventilanordnung
- 311: Rückschlagventil
- 312: Entlüftungsventil
- 313: Druckbegrenzung
- 314: Kolben
- 314.1: Relaisentlüftungskörper
- 314.2: Relaisentsperrkörper
- 315: einstellbare Feder
- 320: Steuerventil
- 321: elektrische Steuerleitung
- 322: Spule
- 331: erste Drossel
- 332: zweite Drossel

- 400: Luftverdichter in Form eines zweistufigen Kolbenkompressors
- 401: erste (Niederdruck)-Verdichterstufe
- 402: zweite (Hochdruck)-Verdichterstufe
- 410: erster Zylinder
- 411,421: Zylinderhubraum
- 420: zweiter Zylinder
- 430: Kurbelwelle
- 431: Antriebswellenkopplung
- 432: Kurbelwellenzapfen
- 440: Gehäuse
- 441: weitere Gehäusebauteile
- 500: Motor
- 501: Antriebswelle
- M: Antriebsmotor
- 502: Lager
- 600: weitere Pneumatikleitung
- 601, 602, 603, 604: Federzweigleitung
- 605: Speicherzweigleitung
- 610: Galerie

- 1000: Druckluftversorgungssystem
- 1001: Druckluftversorgungsanlage
- 1002: Pneumatikanlage
- 1011, 1012, 1013, 1014: Bälge
- 1110: Ventilblock
- 1015: Speicher
- 1111 bis 1114: Magnetspeicher-Wegeventil
- 1115: Magnet-Wegeventil

- A: Achse
- D: Detail
- DL: Druckluftströmung
- E: Exzenterachse, Wellenachse
- HS: Hubstellung
- K1, K2: Kolben
- K11: Kolbenhalterung
- K22: Kopfende
- L1: erstes Pleuellager, Ring-Kugellager, Gelenk-Gleitlager
- L2: zweites Pleuellager
- L2B: Lagerbolzen
- L2BO: Lagerbolzenoberfläche
- L2E: Elastomer-Element
- L2EA: Elastomer-Auswölbung
- L2E1, L2E2: Elastomer-Buchsen
- L2EF: Elastomer-Element-Führung
- L2EK: Elastomer-Element-Kammer
- L2ER: Elastomer-Ring
- L2G: Gleitlager
- L2N: Nadellager
- L2Ni, L2Na: Innenring, Außenring des Nadellagers
- L2ES: Elastomer-Schicht
- L2ER, L2ER1-4: Elastomer-Ringe
- L2ERS: Elastomer-Ringsegment
- L2NW: Walze bzw. Nadel des Nadellagers
- MT: Metallträger
- MTi, MTa: innere, äußere Metallhülse
- MV: Metallpressverbindungselement
- P1, P2: erstes, zweites Pleuel
- V: Volumen zwischen Elastomer-Ringen
- VS: Verdichtungsstellung
- Z: Zylinderachse
- Z1, Z2: Zylinderlauffläche

## Patentansprüche

1. Hubkolbenmaschine (400), insbesondere zwei- oder mehrstufiger Kolbenkompressor (400), aufweisend:
- wenigstens einen ersten Zylinder (420) sowie wenigstens einen dem ersten Zylinder (420) zugeordneten ersten Kolben (K1) und wenigstens einen zweiten Zylinder (410) sowie wenigstens einen dem zweiten Zylinder (410) zugeordneten zweiten Kolben (K2), wobei im Betrieb die Kolben (K1, K2) in einem jeweiligen Zylinderhubraum (411, 421) des jeweiligen Zylinders (410, 420) ausgelenkt werden,
- eine im Betrieb antreibbare Kurbelwelle (430) mit einem exzentrischen Kurbelwellenzapfen (432) und einer Antriebswellen-Kopplung (431), die zum Ankoppeln einer Antriebswelle (501) eines Antriebsmotors (M) zum Antreiben der Kurbelwelle (432) ausgebildet ist,
- ein zum Auslenken des ersten Kolbens (K1) ausgebildetes erstes Pleuel (P1),
- ein zum Auslenken des zweiten Kolbens (K2) ausgebildetes zweites Pleuel (P2), und
- einen Lagerbolzen (L2B), um den das erste (P1) und zweite Pleuel (P2) gegeneinander drehbeweglich sind,
wobei das erste Pleuel (P1) mittels wenigstens einem ersten Pleuellager (L1) direkt am Kurbelwellenzapfen (432) gelagert ist und mittels dem exzentrischen Kurbelwellenzapfen (432) bewegbar ist und das zweite Pleuel (P2) mittels dem Lagerbolzen (L2B) an dem ersten Pleuel (P1) bewegbar ist und
wobei zwischen dem Lagerbolzen (L2B) und wenigstens einem der Pleuel (P1, P2) wenigstens ein zweites Pleuellager (L2) und wenigstens ein das wenigstens eine zweite Pleuellager (L2) elastisch dämpfendes und/oder federndes Elastomer-Element (L2E) angeordnet ist.

2. Hubkolbenmaschine (400) nach Anspruch 1, **dadurch gekennzeichnet, dass** der exzentrische Kurbelwellenzapfen (432) und/oder die Antriebswellen-Kopplung (431) parallel zu einer zu einer Zylinder-Achse (Z) senkrecht verlaufenden Wellen-Achse (E) ausgerichtet ist.

3. Hubkolbenmaschine (400) nach Anspruch 1 oder 2, **dadurch gekennzeichnet, dass**
- das zweite Pleuel (P2) mittels dem zweiten Pleuellager (L2) und dem Lagerbolzen (L2B) indirekt am Kurbelwellenzapfen (432) gelagert ist, und/oder
- an dem ersten (P1) und/oder zweiten Pleuel (P2) der Kolben (K1, K2) angeformt, fest verbunden oder mittels einer Kolbenhalterung (K11) der Kolben (K1) gehalten ist.

4. Hubkolbenmaschine (400) nach einem der Ansprüche 1 bis 3, **dadurch gekennzeichnet, dass** das erste Pleuel (P1) direkt mittels dem exzentrischen Kurbelwellenzapfen (432) bewegbar ist und das zweite Pleuel (P2) indirekt mittels dem exzentrischen Kurbelwellenzapfen (432), insbesondere mittels dem ersten Pleuel (P1), bewegbar ist, vorzugsweise wenigstens das zweite Pleuel (P2) als Schlepppleuel vom ersten Pleuel (P1) als Antriebspleuel bewegbar ist.

5. Hubkolbenmaschine (400) nach einem der Ansprüche 1 bis 4, **dadurch gekennzeichnet, dass** wenigstens eines der Pleuellager (L1, L2) ein Gleitlager (L2G) oder ein Wälzlager (L2N), insbesondere ein Nadellager (L2N), ein Kugellager oder ein Tonnenlager aufweist.

6. Hubkolbenmaschine (400) nach einem der Ansprüche 1 bis 5, **dadurch gekennzeichnet, dass** wenigstens eines der Pleuellager (L1, L2) einen Außenring (L2Na) und/oder einen Innenring (L2Ni) eines Wälzlagers, insbesondere Nadellagers (L2N) aufweist.

7. Hubkolbenmaschine (400) nach einem der Ansprüche 1 bis 6, **dadurch gekennzeichnet, dass** das Elastomer-Element (L2E) ein separates Teil ist und/oder wobei das Elastomer-Element (L2E) dazu dient eine Dämpfungswirkung zu erzeugen.

8. Hubkolbenmaschine (400) nach einem der Ansprüche 1 bis 6, **dadurch gekennzeichnet, dass** das Elastomer-Element (L2E) eine aufgebrachte Schicht, insbesondere eine eingespritzte oder aufvulkanisierte Schicht (L2ES), vorzugsweise eine auf eine Lagerbolzenoberfläche (L2BO), eine Pleuelinnenoberfläche des ersten Pleuels (P1), eine Pleuelinnenoberfläche des zweiten Pleuels (P2) und/oder ein Pleuellager (L1, L2) aufgebrachte Schicht (L2ES), ist, wobei das Elastomer-Element (L2E) im Betrieb als Lauffläche für Walzen (L2NW) eines Pleuellagers (L2N) dient und/oder dazu dient eine Dämpfungswirkung zu erzeugen.

9. Hubkolbenmaschine (400) nach einem der Ansprüche 1 bis 8, **dadurch gekennzeichnet, dass** das zweite Pleuellager (L2) ein Wälzlager (L2N) ist und das Elastomer-Element (L2E) eine auf das Wälzlager (L2N) aufvulkanisierte Elastomer-Schicht (L2ES) ist.

10. Hubkolbenmaschine (400) nach einem der Ansprüche 1 bis 9, **dadurch gekennzeichnet, dass** das Elastomer-Element (L2E) ringförmig, buchsenförmig oder hülsenförmig ist.

11. Hubkolbenmaschine (400) nach einem der Ansprüche 1 bis 9, **dadurch gekennzeichnet, dass** das Elastomer-Element (L2E) plattenförmig, insbesondere eine Noppe oder ringsegmentförmig (L2ERS) ist.

12. Hubkolbenmaschine (400) nach einem der Ansprüche 1 bis 11, **dadurch gekennzeichnet, dass** das Elastomer-Element (L2E) mit einem Metallträger (MT), insbesondere einer Metallbuchse, einer Metallhülse (MTi, MTa), einem Metallring oder einer Metallplatte, verbunden ist oder in Kontakt ist.

13. Hubkolbenmaschine (400) nach einem der Ansprüche 1 bis 12, **dadurch gekennzeichnet, dass** das Elastomer-Element (L2E) wenigstens zwei Elastomer-Ringe (L2ER; L2ER1, L2ER2, L2ER3, L2ER4) aufweist, die parallel und mit einem Abstand zueinander zwischen dem Lagerbolzen (L2B) und wenigstens einem der Pleuel (P1, P2) angeordnet sind und dazu dienen das wenigstens eine zweite Pleuellager (L2) elastisch zu dämpfen.

14. Hubkolbenmaschine (400) nach einem der Ansprüche 1 bis 13, **dadurch gekennzeichnet, dass** das wenigstens eine Elastomer-Element (L2E) zwischen einem inneren (MTi) und einem äußeren Metallträger (MTa) angeordnet ist und der innere Metallträger (MTi) mit dem zweiten Pleuellager (L2) verbunden ist und der äußere Metallträger (MTa) mit wenigstens einem der Pleuel (P1, P2), insbesondere fest und direkt, verbunden ist.

15. Hubkolbenmaschine (400) nach einem der Ansprüche 1 bis 14, **dadurch gekennzeichnet, dass** das wenigstens eine Elastomer-Element (L2E) zwischen einem inneren Metallträger (MTi) und wenigstens einem der Pleuel (P1, P2) angeordnet ist und der innere Metallträger (MTi) mit dem zweiten Pleuellager (L2) verbunden ist und das Elastomer-Element (L2E) mit wenigstens einem der Pleuel (P1, P2), insbesondere fest und direkt, verbunden ist.

16. Hubkolbenmaschine (400) nach einem der Ansprüche 1 bis 15, **dadurch gekennzeichnet, dass** das wenigstens eine Elastomer-Element (L2E) zwischen dem zweiten Pleuellager (L2) und einem äußeren Metallträger (MTa) angeordnet ist und das Elastomer-Element (L2E) mit dem zweiten Pleuellager (L2), insbesondere fest und direkt, verbunden ist und der äußere Metallträger (MTa) mit wenigstens einem der Pleuel (P1, P2) verbunden ist.

17. Hubkolbenmaschine (400) nach einem der Ansprüche 1 bis 16, **dadurch gekennzeichnet, dass** das wenigstens eine Elastomer-Element (L2E) wenigstens zwei voneinander getrennte Ringsegmente (L2ERS) aufweist.

18. Hubkolbenmaschine (400) nach einem der Ansprüche 1 bis 17, **dadurch gekennzeichnet, dass** das wenigstens eine Elastomer-Element (L2E) entlang des Elastomer-Elements (L2E) angeordnete Elastomer-Auswölbungen (L2EA) aufweist, die als Anschläge für Walzen (L2NW) des zweiten Pleuellagers (L2, L2N) dienen.

19. Hubkolbenmaschine (400) nach einem der Ansprüche 1 bis 18, **dadurch gekennzeichnet, dass** das wenigstens eine Elastomer-Element (L2E; L2ERS) entlang des Elastomer-Elements (L2E; L2ERS) angeordnete Elastomer-Auswölbungen (L2EA) aufweist, die ausgebildet sind auf eine Oberfläche des zweiten Pleuellagers (L2, L2N) eine Dämpfungswirkung zu bewirken.

20. Hubkolbenmaschine (400) nach einem der Ansprüche 1 bis 19, **dadurch gekennzeichnet, dass** ein maximaler Auslenkungswinkel der Auslenkung der Pleuel (P1, P2) zwischen jeweiligen Längsachsen der Pleuel (P1, P2) höchstens 14° beträgt, beispielsweise höchstens 10° beträgt, vorzugsweise ungefähr 7° beträgt.

21. Hubkolbenmaschine (400) nach einem der Ansprüche 1 bis 20, **dadurch gekennzeichnet, dass**
- das erste Pleuel (P1) mittels dem ersten Pleuellager (L1) direkt am Kurbelwellenzapfen (432) gelagert ist und an dem ersten Pleuel (P1) mittels einer Kolbenhalterung (K11) der erste Kolben (K1) gehalten ist, und
- das zweite Pleuel (P2) mittels dem zweiten Pleuellager (L2) und dem Lagerbolzen (L2B) mit dem ersten Pleuel (P1) verbunden ist und an dem zweiten Pleuel (P2) der zweite Kolben (K2) angeformt ist.

22. Hubkolbenmaschine (400) nach einem der Ansprüche 1 bis 21, **dadurch gekennzeichnet, dass**
der Kolbenkompressor (400) als ein Zweistufen-Kompressor (400) mit einer ersten und zweiten Verdichterstufe (401, 402), insbesondere als ein TWIN-Kompressor, gebildet ist, wobei:
- das erste Pleuel (P1) der zweiten, insbesondere (Hochdruck-)Verdichterstufe (402) gebildet ist, wobei das erste Pleuel (P1) mittels dem ersten Pleuellager (L1) direkt am Kurbelwellenzapfen (432) gelagert ist, und/oder
- das zweite Pleuel (P2) der ersten, insbesondere (Niederdruck-)Verdichterstufe (401) gebildet ist, wobei das zweite Pleuel (P2) mittels dem zweiten Pleuellager (L2) und dem Lagerbolzen (L2B) direkt am ersten Pleuel (P1) gelagert ist.

23. Hubkolbenmaschine (400) nach einem der Ansprüche 1 bis 22, bei der zwischen dem Lagerbolzen (L2B) und wenigstens einem der Pleuel (P1, P2) ein zweites Pleuellager (L2) und wenigstens ein das zweite Pleuellager (L2) elastisch dämpfendes und/oder federndes Elastomer-Element (L2E) angeordnet ist.

24. Druckluftversorgungsanlage (1001) zum Betreiben einer Pneumatikanlage (1002), insbesondere einer Luftfederanlage eines Fahrzeugs, vorzugsweise eines PKWs, mit einer Druckluftströmung (DL), aufweisend:
- eine Lufttrockneranordnung (100) in einer Pneumatikhauptleitung (200), die eine Druckluftzuführung (1) von einem Luftverdichter (400) und einen Druckluftanschluss (2) zu der Pneumatikanlage (1002) pneumatisch verbindet, und
- eine an die Pneumatikhauptleitung (200) pneumatisch angeschlossene Ventilanordnung (300) zur Steuerung der Druckluftströmung (DL) und einen Lufttrockner (101) in der Pneumatikhauptleitung (200), wobei
- an die Druckluftzuführung (1) ein Luftverdichter (400) mit einer Hubkolbenmaschine (400), insbesondere ein zwei- oder mehrstufiger Kolbenkompressor (400), nach einem der Ansprüche 1 bis 23 angeschlossen ist.

25. Druckluftversorgungssystem (1000) mit einer Pneumatikanlage (1002) und mit einer Druckluftversorgungsanlage (1001) gemäß Anspruch 24 zum Betreiben der Pneumatikanlage (1002) mit einer Druckluftströmung (DL), insbesondere einer Luftfederanlage eines Fahrzeugs, vorzugsweise eines PKWs, wobei die Pneumatikhauptleitung (1002) eine Druckluftzuführung (1) von einem Luftverdichter (400) mit einer Hubkolbenmaschine (400), insbesondere einem zwei- oder mehrstufiger Kolbenkompressor (400), nach einem der Ansprüche 1 bis 23 und einen Druckluftanschluss (2) zu der Pneumatikanlage (1002) pneumatisch verbindet.

26. Fahrzeug, insbesondere PKW, mit einer Pneumatikanlage (1002), insbesondere einer Luftfederanlage, und einer Druckluftversorgungsanlage (1001) gemäß Anspruch 24 zum Betreiben der Pneumatikanlage (1002) mit einer Druckluftströmung (DL).

## Claims

1. Reciprocating-piston machine (400), in particular two-stage or multi-stage piston compressor (400), having:
- at least one first cylinder (420) and at least one first piston (K1) assigned to the first cylinder (420) and at least one second cylinder (410) and at least one second piston (K2) assigned to the second cylinder (410), wherein, during operation, the pistons (K1, K2) are deflected in a respective cylinder displacement chamber (411, 421) of the respective cylinder (410, 420),
- a crankshaft (430) which, during operation, can be driven and which has an eccentric crankshaft journal (432) and a drive shaft coupling (431) which is designed for the coupling of a drive shaft (501) of a drive motor (M) for driving the crankshaft (432),
- a first connecting rod (P1) designed for deflecting the first piston (K1),
- a second connecting rod (P2) designed for deflecting the second piston (K2), and
- a bearing pin (L2B) about which the first (P1) and second connecting rod (P2) are rotationally movable relative to one another,
wherein the first connecting rod (P1) is mounted by means of at least one first connecting-rod bearing (L1) directly on the crankshaft journal (432) and is movable by means of the eccentric crankshaft journal (432), and the second connecting rod (P2) is movable on the first connecting rod (P1) by means of the bearing pin (L2B), and
wherein, between the bearing pin (L2B) and at least one of the connecting rods (P1, P2), there is arranged at least one second connecting-rod bearing (L2) and at least one elastomer element (L2E) which serves for the elastically dampened and/or resilient mounting of the at least one second connecting-rod bearing (L2).

2. Reciprocating-piston machine (400) according to Claim 1, **characterized in that** the eccentric crankshaft journal (432) and/or the drive shaft coupling (431) are/is aligned parallel to a shaft axis (E) running perpendicular to a cylinder axis (Z).

3. Reciprocating-piston machine (400) according to Claim 1 or 2, **characterized in that**
- the second connecting rod (P2) is mounted by means of the second connecting-rod bearing (L2) and the bearing pin (L2B) indirectly on the crankshaft journal (432), and/or
- the piston (K1, K2) is integrally formed on, fixedly connected to, or held by means of a piston holder (K11) of the piston (K1) on the first (P1) and/or second connecting rod (P2).

4. Reciprocating-piston machine (400) according to one of Claims 1 to 3, **characterized in that** the first connecting rod (P1) is movable directly by means of the eccentric crankshaft journal (432) and the second connecting rod (P2) is movable indirectly by means of the eccentric crankshaft journal (432), in particular by means of the first connecting rod (P1), and, preferably, at least the second connecting rod (P2) as follower connecting rod is movable by the first connecting rod (P1) as drive connecting rod.

5. Reciprocating-piston machine (400) according to one of Claims 1 to 4, **characterized in that** at least one of the connecting-rod bearings (L1, L2) has a plain bearing (L2G) or a rolling bearing (L2N), in particular a needle bearing (L2N), a ball bearing or a spherical roller bearing.

6. Reciprocating-piston machine (400) according to one of Claims 1 to 5, **characterized in that** at least one of the connecting-rod bearings (L1, L2) has an outer ring (L2Na) and/or an inner ring (L2Ni) of a rolling bearing, in particular needle bearing (L2N).

7. Reciprocating-piston machine (400) according to one of Claims 1 to 6, **characterized in that** the elastomer element (L2E) is a separate part and/or wherein the elastomer element (L2E) serves for generating a damping action.

8. Reciprocating-piston machine (400) according to one of Claims 1 to 6, **characterized in that** the elastomer element (L2E) is an applied layer, in particular an injection-molded or vulcanized-on layer (L2ES), preferably is a layer (L2ES) applied to a bearing pin surface (L2BO), to a connecting-rod inner surface of the first connecting rod (PI), to a connecting-rod inner surface of the second connecting rod (P2) and/or to a connecting-rod bearing (L1, L2), wherein the elastomer element (L2E), during operation, serves as a raceway for rollers (L2NW) of a connecting-rod bearing (L2N) and/or serves for generating a damping action.

9. Reciprocating-piston machine (400) according to one of Claims 1 to 8, **characterized in that** the second connecting-rod bearing (L2) is a rolling bearing (L2N), and the elastomer element (L2E) is an elastomer layer (L2ES) vulcanized onto the rolling bearing (L2N).

10. Reciprocating-piston machine (400) according to one of Claims 1 to 9, **characterized in that** the elastomer element (L2E) is of ring-shaped, bushing-shaped or sleeve-shaped form.

11. Reciprocating-piston machine (400) according to one of Claims 1 to 9, **characterized in that** the elastomer element (L2E) is plate-shaped, in particular a stud or ring-segment-shaped (L2ERS).

12. Reciprocating-piston machine (400) according to one of Claims 1 to 11, **characterized in that** the elastomer element (L2E) is connected to or in contact with a metal support (MT), in particular a metal bushing, a metal sleeve (MTi, MTa), a metal ring or a metal plate.

13. Reciprocating-piston machine (400) according to one of Claims 1 to 12, **characterized in that** the elastomer element (L2E) has at least two elastomer rings (L2ER; L2ER1, L2ER2, L2ER3, L2ER4), which are arranged parallel and with a spacing to one another between the bearing pin (L2B) and at least one of the connecting rods (P1, P2) and which serve for elastically damping the at least one second connecting-rod bearing (L2).

14. Reciprocating-piston machine (400) according to one of Claims 1 to 13, **characterized in that** the at least one elastomer element (L2E) is arranged between an inner (MTi) and an outer metal support (MTa), and the inner metal support (MTi) is connected to the second connecting-rod bearing (L2) and the outer metal support (MTa) is connected, in particular fixedly and directly, to at least one of the connecting rods (P1, P2).

15. Reciprocating-piston machine (400) according to one of Claims 1 to 14, **characterized in that** the at least one elastomer element (L2E) is arranged between an inner metal support (MTi) and at least one of the connecting rods (P1, P2), and the inner metal support (MTi) is connected to the second connecting-rod bearing (L2) and the elastomer element (L2E) is connected, in particular fixedly and directly, to at least one of the connecting rods (P1, P2).

16. Reciprocating-piston machine (400) according to one of Claims 1 to 15, **characterized in that** the at least one elastomer element (L2E) is arranged between the second connecting-rod bearing (L2) and an outer metal support (MTa), and the elastomer element (L2E) is connected, in particular fixedly and directly, to the second connecting-rod bearing (L2), and the outer metal support (MTa) is connected to at least one of the connecting rods (P1, P2).

17. Reciprocating-piston machine (400) according to one of Claims 1 to 16, **characterized in that** the at least one elastomer element (L2E) has at least two mutually separate ring segments (L2ERS).

18. Reciprocating-piston machine (400) according to one of Claims 1 to 17, **characterized in that** the at least one elastomer element (L2E) has elastomer protuberances (L2EA) which are arranged along the elastomer element (L2E) and which serve as stops for rollers (L2NW) of the second connecting-rod bearing (L2, L2N).

19. Reciprocating-piston machine (400) according to one of Claims 1 to 18, **characterized in that** the at least one elastomer element (L2E; L2ERS) has elastomer protuberances (L2EA) which are arranged along the elastomer element (L2E; L2ERS) which are designed to exert a damping action on a surface of the second connecting-rod bearing (L2, L2N).

20. Reciprocating-piston machine (400) according to one of Claims 1 to 19, **characterized in that** a maximum deflection angle of the deflection of the connecting rods (P1, P2) between respective longitudinal axes of the connecting rods (P1, P2) amounts to at most 14°, for example amounts to at most 10°, preferably amounts to approximately 7°.

21. Reciprocating-piston machine (400) according to one of Claims 1 to 20, **characterized in that**
- the first connecting rod (P1) is mounted by means of the first connecting-rod bearing (L1) directly on the crankshaft journal (432), and the first piston (K1) is held on the first connecting rod (P1) by means of a piston holder (K11), and
- the second connecting rod (P2) is connected to the first connecting rod (P1) by means of the second connecting-rod bearing (L2) and the bearing pin (L2B) and the second piston (K2) is formed integrally on the second connecting rod (P2).

22. Reciprocating-piston machine (400) according to one of Claims 1 to 21, **characterized in that**
the piston compressor (400) is designed as a two-stage compressor (400) with a first and second compressor stage (401, 402), in particular as a TWIN compressor, wherein:
- the first connecting rod (P1) of the second, in particular (high-pressure) compressor stage (402) is formed, wherein the first connecting rod (P1) is mounted by means of the first connecting-rod bearing (L1) directly on the crankshaft journal (432), and/or
- the second connecting rod (P2) of the first, in particular (low-pressure) compressor stage (401) is formed, wherein the second connecting rod (P2) is mounted by means of the second connecting-rod bearing (L2) and the bearing pin (L2B) directly on the first connecting rod (P1).

23. Reciprocating-piston machine (400) according to one of Claims 1 to 22, in which, between the bearing pin (L2B) and at least one of the connecting rods (P1, P2), there is arranged a second connecting-rod bearing (L2) and at least one elastomer element (L2E) which serves for the elastically dampened and/or resilient mounting of the second connecting-rod bearing (L2).

24. Compressed-air feed installation (1001) for operating a pneumatic installation (1002), in particular an air spring installation of a vehicle, preferably of a passenger motor vehicle, with a compressed-air flow (DL), having:
- an air dryer arrangement (100) in a pneumatic main line (200) which pneumatically connects a compressed-air supply (1) from an air compressor (400) and a compressed-air connection (2) to the pneumatic installation (1002), and
- a valve arrangement (300) which is pneumatically connected to the pneumatic main line (200) and which serves for controlling the compressed-air flow (DL), and an air dryer (101) in the pneumatic main line (200), wherein
- an air compressor (400) with a reciprocating-piston machine (400), in particular a two-stage or multi-stage piston compressor (400), according to one of Claims 1 to 23 is connected to the compressed-air supply (1).

25. Compressed-air feed system (1000) having a pneumatic installation (1002) and having a compressed-air feed installation (1001) according to Claim 24 for operating the pneumatic installation (1002) with a compressed-air flow (DL), in particular an air spring installation of a vehicle, preferably of a passenger motor vehicle, wherein the pneumatic main line (1002) pneumatically connects a compressed-air supply (1) from an air compressor (400) with a reciprocating-piston machine (400), in particular a two-stage or multi-stage piston compressor (400), according to one of Claims 1 to 23 and a compressed-air connection (2) to the pneumatic installation (1002).

26. Vehicle, in particular passenger motor vehicle, having a pneumatic installation (1002), in particular an air spring installation, and having a compressed-air feed installation (1001) according to Claim 24 for operating the pneumatic installation (1002) with a compressed-air flow (DL).

## Revendications

1. Machine à pistons alternatifs (400), en particulier compresseur à pistons à deux ou plusieurs étages (400), présentant :
- au moins un premier cylindre (420) ainsi qu'au moins un premier piston (K1) associé au premier cylindre (420) et au moins un deuxième cylindre (410) ainsi qu'au moins un deuxième piston (K2) associé au deuxième cylindre (410), les pistons (K1, K2), pendant le fonctionnement, étant déviés dans une chambre de course de cylindre respective (411, 421) du cylindre respectif (410, 420),
- un vilebrequin (430) pouvant être entraîné pendant le fonctionnement avec un maneton de vilebrequin excentrique (432) et un accouplement d'arbre d'entraînement (431), qui est réalisé pour accoupler un arbre d'entraînement (501) d'un moteur d'entraînement (M) pour l'entraînement du vilebrequin (432),
- une première bielle (P1) réalisée pour dévier le premier piston (K1),
- une deuxième bielle (P2) réalisée pour dévier le deuxième piston (K2), et
- un tourillon de palier (L2B), autour duquel la première (P1) et la deuxième bielle (P2) peuvent être tournées l'une par rapport à l'autre,
la première bielle (P1) étant supportée directement sur le maneton de vilebrequin (432) au moyen d'au moins un premier palier de bielle (L1) et pouvant être déplacée au moyen du maneton de vilebrequin excentrique (432) et la deuxième bielle (P2) pouvant être déplacée au moyen du tourillon de palier (L2B) sur la première bielle (P1) et
entre le tourillon de palier (L2B) et au moins une des bielles (P1, P2) étant disposés au moins un deuxième palier de bielle (L2) et au moins un élément élastomère (L2E) amortissant et/ou supportant élastiquement l'au moins un deuxième palier de bielle (L2).

2. Machine à pistons alternatifs (400) selon la revendication 1, **caractérisée en ce que** le maneton de vilebrequin excentrique (432) et/ou l'accouplement d'arbre d'entraînement (431) sont orientés parallèlement à un axe d'arbre (E) s'étendant perpendiculairement à un axe de cylindre (Z).

3. Machine à pistons alternatifs (400) selon la revendication 1 ou 2, **caractérisée en ce**
- **que** la deuxième bielle (P2) est supportée indirectement sur le maneton de vilebrequin (432) au moyen du deuxième palier de bielle (L2) et du tourillon de palier (L2B), et/ou
- **que** le piston (K1, K2) est façonné, connecté fixement ou le piston (K1) est retenu au moyen d'une fixation de piston (K11) au niveau de la première (P1) et ou deuxième bielle (P2).

4. Machine à pistons alternatifs (400) selon l'une quelconque des revendications 1 à 3, **caractérisée en ce que** la première bielle (P1) peut être déplacée directement au moyen du maneton de vilebrequin excentrique (432) et la deuxième bielle (P2) peut être déplacée indirectement au moyen du maneton de vilebrequin excentrique (432), en particulier au moyen de la première bielle (P1), de préférence au moins la deuxième bielle (P2) pouvant être déplacée en tant que bielle menée par la première bielle (P1) en tant que bielle d'entraînement.

5. Machine à pistons alternatifs (400) selon l'une quelconque des revendications 1 à 4, **caractérisée en ce qu'**au moins un des paliers de bielle (L1, L2) présente un palier lisse (L2G) ou un palier à roulement (L2N), en particulier un palier à aiguilles (L2N), un roulement à billes ou un palier à rouleaux sphériques.

6. Machine à pistons alternatifs (400) selon l'une quelconque des revendications 1 à 5, **caractérisée en ce qu'**au moins un des paliers de bielle (L1, L2) présente une bague extérieure (L2Na) et/ou une bague intérieure (L2Ni) d'un palier à roulement, en particulier d'un palier à aiguilles (L2N).

7. Machine à pistons alternatifs (400) selon l'une quelconque des revendications 1 à 6, **caractérisée en ce que** l'élément élastomère (L2E) est une pièce séparée et/ou l'élément élastomère (L2E) servant à générer un effet d'amortissement.

8. Machine à pistons alternatifs (400) selon l'une quelconque des revendications 1 à 6, **caractérisée en ce que** l'élément élastomère (L2E) est une couche appliquée, en particulier une couche pulvérisée ou vulcanisée (L2ES), de préférence une couche (L2ES) appliquée sur une surface du tourillon de palier (L2BO), une surface intérieure de bielle de la première bielle (P1), une surface intérieure de bielle de la deuxième bielle (P2) et/ou un palier de bielle (L1, L2), l'élément élastomère (L2E) pendant le fonctionnement, servant de surface de roulement pour des rouleaux (L2NW) d'un palier de bielle (L2N) et/ou servant à générer un effet d'amortissement.

9. Machine à pistons alternatifs (400) selon l'une quelconque des revendications 1 à 8, **caractérisée en ce que** le deuxième palier de bielle (L2) est un palier à roulement (L2N) et l'élément élastomère (L2E) est une couche élastomère (L2ES) vulcanisée sur le palier à roulement (L2N).

10. Machine à pistons alternatifs (400) selon l'une quelconque des revendications 1 à 9, **caractérisée en ce que** l'élément élastomère (L2E) est annulaire, en forme de douille ou en forme de manchon.

11. Machine à pistons alternatifs (400) selon l'une quelconque des revendications 1 à 9, **caractérisée en ce que** l'élément élastomère (L2E) est en forme de plaque, en particulier est une noppe ou est en forme de segment annulaire (L2ERS).

12. Machine à pistons alternatifs (400) selon l'une quelconque des revendications 1 à 11, **caractérisée en ce que** l'élément élastomère (L2E) est connecté à, ou est en contact avec, un support métallique (MT), en particulier une douille métallique, un manchon métallique (MTi, MTa), une bague métallique ou une plaque métallique.

13. Machine à pistons alternatifs (400) selon l'une quelconque des revendications 1 à 12, **caractérisée en ce que** l'élément élastomère (L2E) présente au moins deux bagues élastomères (L2ER ; L2ER1, L2ER2, L2ER3, L2ER4) qui sont disposées parallèlement et à distance l'une de l'autre entre le tourillon de palier (L2B) et au moins une des bielles (P1, P2) et servent à amortir élastiquement l'au moins un deuxième palier de bielle (L2).

14. Machine à pistons alternatifs (400) selon l'une quelconque des revendications 1 à 13, **caractérisée en ce que** l'au moins un élément élastomère (L2E) est disposé entre un support métallique intérieur (MTi) et extérieur (MTa), et le support métallique intérieur (MTi) est connecté au deuxième palier de bielle (L2) et le support métallique extérieur (MTa) est connecté, notamment fixement et directement, à au moins l'une des bielles (P1, P2) .

15. Machine à pistons alternatifs (400) selon l'une quelconque des revendications 1 à 14, **caractérisée en ce que** l'au moins un élément élastomère (L2E) est disposé entre un support métallique intérieur (MTi) et au moins l'une des bielles (P1, P2), et le support métallique intérieur (MTi) est connecté au deuxième palier de bielle (L2) et l'élément élastomère (L2E) est connecté, notamment fixement et directement, à au moins l'une des bielles (P1, P2) .

16. Machine à pistons alternatifs (400) selon l'une quelconque des revendications 1 à 15, **caractérisée en ce que** l'au moins un élément élastomère (L2E) est disposé entre le deuxième palier de bielle (L2) et un support métallique extérieur (MTa) et l'élément élastomère (L2E) est connecté, notamment fixement et directement, au deuxième palier de bielle (L2), et le support métallique extérieur (MTa) est connecté à au moins l'une des bielles (P1, P2).

17. Machine à pistons alternatifs (400) selon l'une quelconque des revendications 1 à 16, **caractérisée en ce que** l'au moins un élément élastomère (L2E) présente au moins deux segments annulaires (L2ERS) séparés l'un de l'autre.

18. Machine à pistons alternatifs (400) selon l'une quelconque des revendications 1 à 17, **caractérisée en ce que** l'au moins un élément élastomère (L2E) présente des bombements élastomères (L2EA) disposés le long de l'élément élastomère (L2E), lesquels servent de butées pour des rouleaux (L2NW) du deuxième palier de bielle (L2, L2N).

19. Machine à pistons alternatifs (400) selon l'une quelconque des revendications 1 à 18, **caractérisée en ce que** l'au moins un élément élastomère (L2E ; L2ERS) présente des bombements élastomères (L2EA) disposés le long de l'élément élastomère (L2E ; L2ERS), lesquels sont réalisés de manière à provoquer un effet d'amortissement sur une surface du deuxième palier de bielle (L2, L2N).

20. Machine à pistons alternatifs (400) selon l'une quelconque des revendications 1 à 19, **caractérisée en ce qu'**un angle de déviation maximal de déviation des bielles (P1, P2) entre des axes longitudinaux respectifs des bielles (P1, P2) vaut au plus 14°, par exemple au plus 10°, de préférence environ 7°.

21. Machine à pistons alternatifs (400) selon l'une quelconque des revendications 1 à 20, **caractérisée en ce que**
- la première bielle (P1) est supportée directement sur le maneton de vilebrequin (432) au moyen du premier palier de bielle (L1), et le premier piston (K1) est retenu sur la première bielle (P1) au moyen d'une fixation de piston (K11), et
- la deuxième bielle (P2) est connectée à la première bielle (P1) au moyen du deuxième palier de bielle (L2) et du tourillon de palier (L2B) et le deuxième piston (K2) est façonné sur la deuxième bielle (P2).

22. Machine à pistons alternatifs (400) selon l'une quelconque des revendications 1 à 21, **caractérisée en ce que**
le compresseur de piston (400) est formé en tant que compresseur à deux étages (400), avec un premier et un deuxième étage de compresseur (401, 402), en particulier en tant que TWIN compresseur
- la première bielle (P1) du deuxième étage de compresseur (402), notamment l'étage haute pression du compresseur, étant formée, la première bielle (P1) étant supportée directement sur le maneton de vilebrequin (432) au moyen du premier palier de bielle (L1), et/ou
- la deuxième bielle (P2) du premier étage de compresseur (401), en particulier de l'étage basse pression du compresseur, étant formée, la deuxième bielle (P2) étant supportée directement sur la première bielle (P1) au moyen du deuxième palier de bielle (L2) et du tourillon de palier (L2B).

23. Machine à pistons alternatifs (400) selon l'une quelconque des revendications 1 à 22, dans laquelle, entre le tourillon de palier (L2B) et au moins l'une des bielles (P1, P2) est disposé un deuxième palier de bielle (L2) et au moins un élément élastomère (L2E) supportant et/ou amortissant élastiquement le deuxième palier de bielle (L2).

24. Installation d'alimentation en air comprimé (1001) pour faire fonctionner une installation pneumatique (1002), en particulier une installation de ressort pneumatique d'un véhicule, de préférence d'un véhicule de tourisme, comprenant un écoulement d'air comprimé (DL), présentant :
- un agencement de sécheur d'air (100) dans une conduite pneumatique principale (200) qui relie pneumatiquement une alimentation en air comprimé (1) d'un compresseur d'air (400) et un raccord d'air comprimé (2) à l'installation pneumatique (1002), et
- un agencement de soupape (300) raccordé pneumatiquement à la conduite pneumatique principale (200) pour commander l'écoulement d'air comprimé (DL) et un sécheur d'air (101) dans la conduite pneumatique principale (200),
- un compresseur d'air (400) avec une machine à pistons alternatifs (400), en particulier un compresseur à pistons à deux ou plusieurs étages (400), selon l'une quelconque des revendications 1 à 23, étant raccordé à l'alimentation en air comprimé (1).

25. Système d'alimentation en air comprimé (1000) comprenant une installation pneumatique (1002) et une installation d'alimentation en air comprimé (1001) selon la revendication 24, pour faire fonctionner l'installation pneumatique (1002) avec un écoulement d'air comprimé (DL), en particulier une installation de ressort pneumatique d'un véhicule, de préférence d'un véhicule de tourisme, la conduite pneumatique principale (1002) reliant pneumatiquement une alimentation en air comprimé (1) d'un compresseur d'air (400) avec une machine à pistons alternatifs (400), en particulier un compresseur à pistons à deux ou plusieurs étages (400), selon l'une quelconque des revendications 1 à 23, et un raccord d'air comprimé (2) à l'installation pneumatique (1002).

26. Véhicule, en particulier véhicule de tourisme, comprenant une installation pneumatique (1002), en particulier une installation de ressort pneumatique, et une installation d'alimentation en air comprimé (1001) selon la revendication 24, pour faire fonctionner l'installation pneumatique (1002) avec un écoulement d'air comprimé (DL).
